(19)

Europäisches
Patentamt
European
Patent Office
Office européen
des brevets

(11)  **EP 2 640 138 A1**

(12)  **EUROPEAN PATENT APPLICATION**

(43) Date of publication:
   **18.09.2013   Bulletin 2013/38**

(51) Int Cl.:
   ***H04W 56/00*** *(2009.01)*

(21) Application number: **12001807.2**

(22) Date of filing: **16.03.2012**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**

(71) Applicant: **Panasonic Corporation
   Osaka 571-8501 (JP)**

(72) Inventors:
   • **Feuersaenger, Martin
    63225 Langen (DE)**

   • **Basu-Mallick, Prateek
    63225 Langen (DE)**
   • **Loehr, Joachim
    63225 Langen (DE)**
   • **Tamura, Takashi
    Osaka 540-6207 (JP)**

(74) Representative: **Grünecker, Kinkeldey,
   Stockmair & Schwanhäusser
   Leopoldstrasse 4
   80802 München (DE)**

(54)   **Reconfiguration of timing advance groups**

(57)   The invention relates to methods for re-configuration of timing advance groups by a mobile terminal in a mobile communication system. The invention is also providing apparatus for performing these methods, and computer readable media the instructions of which cause the apparatus and system to perform the methods described herein. In order to allow for aligning the timing of uplink transmissions on uplink component carriers, where different propagation delays are imposed on the transmissions on the uplink component carriers, the inventions suggests to time align the uplink component carriers based on a reference time alignment of a reference cell and a reception time difference or propagation delay difference between the downlink transmissions in the reference cell and the other radio cells, the uplink component carriers of which need to be time aligned.

Cell A, B, C in a TAG; A is the timing ref. cell

UE                                                    Network

                                          Need to change
                                          the DL TRC to

← PDCCH Order (Cell B; PreambleIndex = '00000')

Cell B is the DL Timing Reference Cell

**Fig. 19**

**Description**

**FIELD OF THE INVENTION**

The invention relates to methods for reconfiguring timing advance groups by a mobile terminal in a mobile communication system. The invention is also providing apparatus and system for performing the methods described herein, as well as computer readable media the instructions of which cause the apparatus and system to perform the methods described herein.

**TECHNICAL BACKGROUND**

**Long Term Evolution (LTE)**

Third- generation mobile systems (3G) based on WCDMA radio- access technology are being deployed on a broad scale all around the world. A first step in enhancing or evolving this technology entails introducing High- Speed Downlink Packet Access (HSDPA) and an enhanced uplink, also referred to as High Speed Uplink Packet Access (HSUPA) , giving a radio- access technology that is highly competitive.

In order to be prepared for further increasing user demands and to be competitive against new radio access technologies 3GPP introduced a new mobile communication system which is called Long Term Evolution (LTE). LTE is designed to meet the carrier needs for high speed data and media transport as well as high capacity voice support to the next decade. The ability to provide high bit rates is a key measure for LTE.

The work item (WI) specification on Long-Term Evolution (LTE) called Evolved UMTS Terrestrial Radio Access (UTRA) and UMTS Terrestrial Radio Access Network (UTRAN) is to be finalized as Release 8 (LTE Rel. 8). The LTE system represents efficient packet-based radio access and radio access networks that provide full IP-based functionalities with low latency and low cost. In LTE, scalable multiple transmission bandwidths are specified such as 1.4, 3.0, 5.0, 10.0, 15.0, and 20.0 MHz, in order to achieve flexible system deployment using a given spectrum. In the downlink, Orthogonal Frequency Division Multiplexing (OFDM) based radio access was adopted because of its inherent immunity to multipath interference (MPI) due to a low symbol rate, the use of a cyclic prefix (CP), and its affinity to different transmission bandwidth arrangements. Single-carrier frequency division multiple access (SC-FDMA) based radio access was adopted in the uplink, since provisioning of wide area coverage was prioritized over improvement in the peak data rate considering the restricted transmit power of the user equipment (UE). Many key packet radio access techniques are employed including multiple-input multiple-output (MIMO) channel transmission techniques, and a highly efficient control signaling structure is achieved in LTE Rel. 8/9.

**LTE architecture**

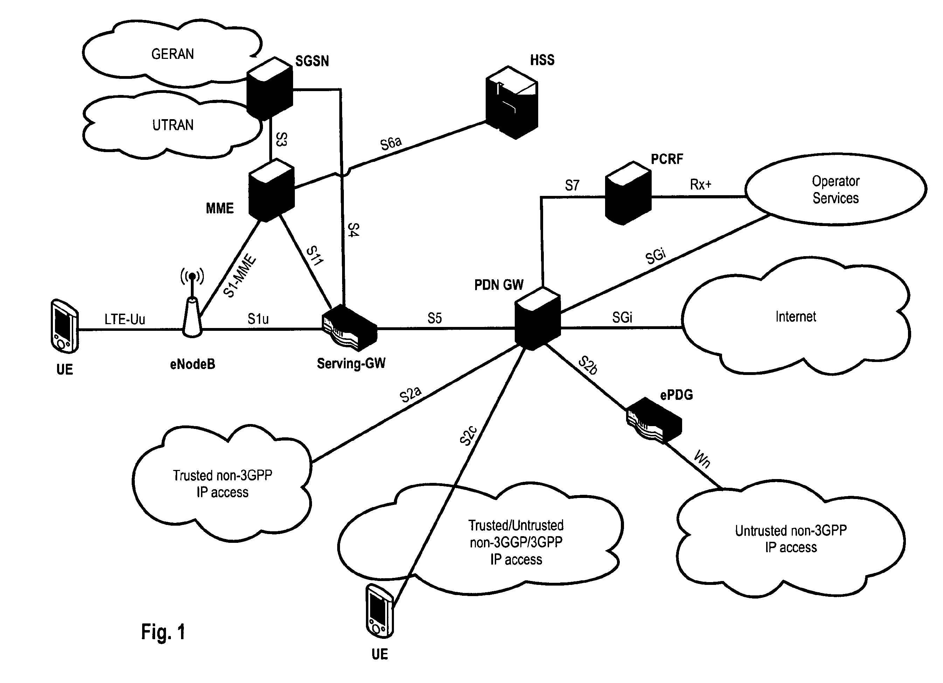

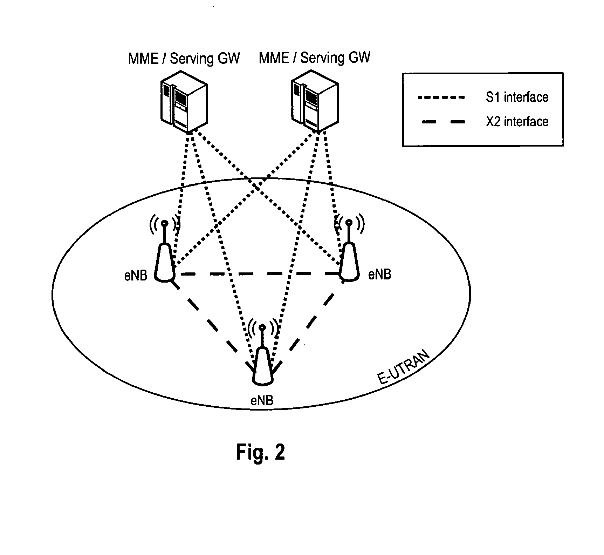

The overall architecture is shown in Fig. 1 and a more detailed representation of the E-UTRAN architecture is given in Fig. 2. The E-UTRAN consists of eNodeB, providing the E-UTRA user plane (PDCP/RLC/MAC/PHY) and control plane (RRC) protocol terminations towards the user equipment (UE). The eNodeB (eNB) hosts the Physical (PHY), Medium Access Control (MAC), Radio Link Control (RLC), and Packet Data Control Protocol (PDCP) layers that include the functionality of user-plane header-compression and encryption. It also offers Radio Resource Control (RRC) functionality corresponding to the control plane. It performs many functions including radio resource management, admission control, scheduling, enforcement of negotiated uplink Quality of Service (QoS), cell information broadcast, ciphering/deciphering of user and control plane data, and compression/decompression of downlink/uplink user plane packet headers. The eNodeBs are interconnected with each other by means of the X2 interface.

The eNodeBs are also connected by means of the S1 interface to the EPC (Evolved Packet Core), more specifically to the MME (Mobility Management Entity) by means of the S1-MME and to the Serving Gateway (SGW) by means of the S1-U. The S1 interface supports a many-to-many relation between MMEs/Serving Gateways and eNodeBs. The SGW routes and forwards user data packets, while also acting as the mobility anchor for the user plane during inter-eNodeB handovers and as the anchor for mobility between LTE and other 3GPP technologies (terminating S4 interface and relaying the traffic between 2G/3G systems and PDN GW). For idle state user equipments, the SGW terminates the downlink data path and triggers paging when downlink data arrives for the user equipment. It manages and stores user equipment contexts, e.g. parameters of the IP bearer service, network internal routing information. It also performs replication of the user traffic in case of lawful interception.

The MME is the key control-node for the LTE access-network. It is responsible for idle mode user equipment tracking and paging procedure including retransmissions. It is involved in the bearer activation/deactivation process and is also responsible for choosing the SGW for a user equipment at the initial attach and at time of intra-LTE handover involving Core Network (CN) node relocation. It is responsible for authenticating the user (by interacting with the HSS).

The Non-Access Stratum (NAS) signaling terminates at the MME and it is also responsible for generation and allocation of temporary identities to user equipments. It checks the authorization of the user equipment to camp on the service provider's Public Land Mobile Network (PLMN) and enforces user equipment roaming restrictions. The MME is the termination point in the network for ciphering/integrity protection for NAS signaling and handles the security key management. Lawful interception of signaling is also supported by the MME. The MME also provides the control plane function for mobility between LTE and 2G/3G access networks with the S3 interface terminating at the MME from the SGSN. The MME also terminates the S6a interface towards the home HSS for roaming user equipments.

**Component Carrier Structure in LTE**

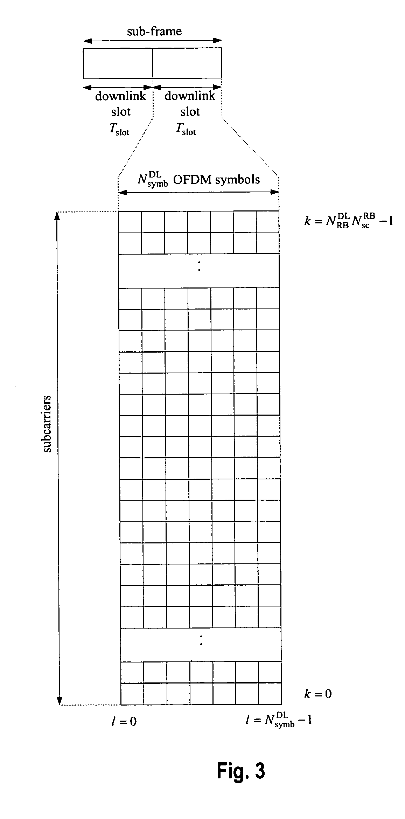

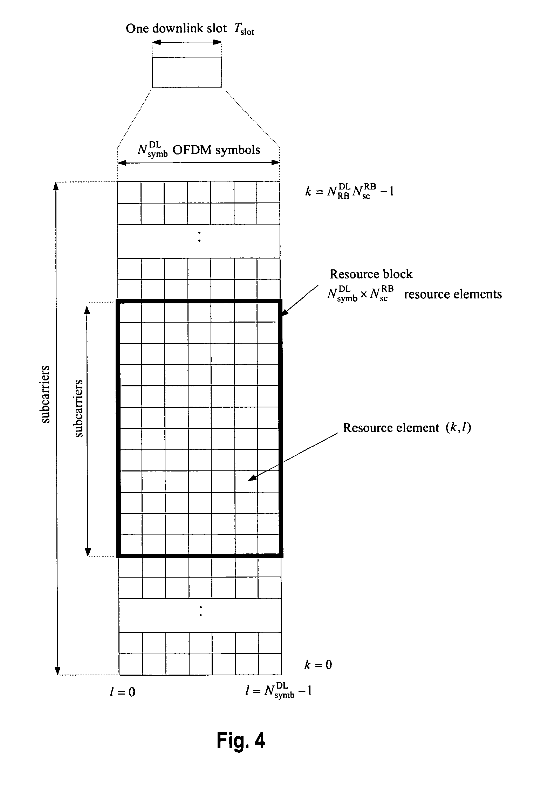

The downlink component carrier of a 3GPP LTE system is subdivided in the time-frequency domain in so-called sub-frames. In 3GPP LTE each sub-frame is divided into two downlink slots as shown in Fig. 3, wherein the first downlink slot comprises the control channel region (PDCCH region) within the first OFDM symbols. Each sub-frame consists of a give number of OFDM symbols in the time domain (12 or 14 OFDM symbols in 3GPP LTE (Release 8)), wherein each of OFDM symbol spans over the entire bandwidth of the component carrier. The OFDM symbols thus each consists of a number of modulation symbols transmitted on respective $N_{RB}^{DL} \times N_{sc}^{RB}$ subcarriers as also shown in Fig. 4.

Assuming a multi-carrier communication system, e.g. employing OFDM, as for example used in 3GPP Long Term Evolution (LTE), the smallest unit of resources that can be assigned by the scheduler is one "resource block". A physical resource block is defined as $N_{symb}^{DL}$ consecutive OFDM symbols in the time domain and $N_{sc}^{RB}$ consecutive subcarriers in the frequency domain as exemplified in Fig. 4. In 3GPP LTE (Release 8), a physical resource block thus consists of $N_{symb}^{DL} \times N_{sc}^{RB}$ resource elements, corresponding to one slot in the time domain and 180 kHz in the frequency domain (for further details on the downlink resource grid, see for example 3GPP TS 36.211, "Evolved Universal Terrestrial Radio Access (E-UTRA); Physical Channels and Modulation (Release 8)", version 8.9.0 or 9.0.0, section 6.2, available at http://www.3gpp.org and incorporated herein by reference).

The term "component carrier" refers to a combination of several resource blocks. In future releases of LTE, the term "component carrier" is no longer used; instead, the terminology is changed to "cell", which refers to a combination of downlink and optionally uplink resources. The linking between the carrier frequency of the downlink resources and the carrier frequency of the uplink resources is indicated in the system information transmitted on the downlink resources.

**Uplink Access scheme for LTE**

For Uplink transmission, power-efficient user-terminal transmission is necessary to maximize coverage. Single-carrier transmission combined with FDMA with dynamic bandwidth allocation has been chosen as the evolved UTRA uplink transmission scheme. The main reason for the preference for single-carrier transmission is the lower peak-to-average power ratio (PAPR), compared to multi-carrier signals (OFDMA), and the corresponding improved power-amplifier efficiency and assumed improved coverage (higher data rates for a given terminal peak power). During each time interval, Node B assigns users a unique time/frequency resource for transmitting user data thereby ensuring intra-cell orthogonality. An orthogonal access in the uplink promises increased spectral efficiency by eliminating intra-cell interference. Interference due to multipath propagation is handled at the base station (Node B), aided by insertion of a cyclic prefix in the transmitted signal.

The basic physical resource used for data transmission consists of a frequency resource of size BWgrant during one time interval, e.g. a sub-frame of 0.5 ms, onto which coded information bits are mapped. It should be noted that a sub-frame, also referred to as transmission time interval (TTI), is the smallest time interval for user data transmission. It is however possible to assign a frequency resource BWgrant over a longer time period than one TTI to a user by concatenation of sub-frames.

**Uplink Scheduling Scheme for LTE**

The uplink scheme allows for both scheduled access, i.e. controlled by eNB, and contention-based access.

In case of scheduled access the UE is allocated a certain frequency resource for a certain time (i.e. a time/frequency resource) for uplink data transmission. However, some time/frequency resources can be allocated for contention-based access. Within these time/frequency resources, UEs can transmit without first being scheduled. One scenario where UE is making a contention-based access is for example the random access, i.e. when UE is performing initial access to a cell or for requesting uplink resources.

For the scheduled access Node B scheduler assigns a user a unique frequency/time resource for uplink data transmission. More specifically the scheduler determines

o which UE(s) that is (are) allowed to transmit,

∅ which physical channel resources (frequency) ,

∅ Transport format (Modulation Coding Scheme (MCS)) to be used by the mobile terminal for transmission

The allocation information is signalled to the UE via a scheduling grant, sent on the L1/L2 control channel. For simplicity reasons this channel is called uplink grant channel in the following. A scheduling grant message contains at least information which part of the frequency band the UE is allowed to use, the validity period of the grant, and the transport format the UE has to use for the upcoming uplink transmission. The shortest validity period is one sub-frame. Additional information may also be included in the grant message, depending on the selected scheme. Only "per UE" grants are used to grant the right to transmit on the UL-SCH (i.e. there are no "per UE per RB" grants). Therefore the UE needs to distribute the allocated resources among the radio bearers according to some rules, which will be explained in detail in the next section. Unlike in HSUPA there is no UE based transport format selection. The eNB decides the transport format based on some information, e.g. reported scheduling information and QoS info, and UE has to follow the selected transport format. In HSUPA Node B assigns the maximum uplink resource and UE selects accordingly the actual transport format for the data transmissions.

Since the scheduling of radio resources is the most important function in a shared channel access network for determining Quality of service, there are a number of requirements that should be fulfilled by the UL scheduling scheme for LTE in order to allow for an efficient QoS management.

∅ Starvation of low priority services should be avoided

∅ Clear QoS differentiation for radio bearers/services should be supported by the scheduling scheme

∅ The UL reporting should allow fine granular buffer reports (e.g. per radio bearer or per radio bearer group) in order to allow the eNB scheduler to identify for which Radio Bearer/service data is to be sent.

∅ It should be possible to make clear QoS differentiation between services of different users

∅ It should be possible to provide a minimum bit rate per radio bearer

As can be seen from above list one essential aspect of the LTE scheduling scheme is to provide mechanisms with which the operator can control the partitioning of its aggregated cell capacity between the radio bearers of the different QoS classes. The QoS class of a radio bearer is identified by the QoS profile of the corresponding SAE bearer signalled from AGW to eNB as described before. An operator can then allocate a certain amount of its aggregated cell capacity to the aggregated traffic associated with radio bearers of a certain QoS class. The main goal of employing this class-based approach is to be able to differentiate the treatment of packets depending on the QoS class they belong to.

**L1/2 Control Signalling**

In order to inform the scheduled users about their allocation status, transport format and other data related information (e.g. HARQ) L1/L2 control signaling needs to be transmitted on the downlink along with the data. The control signaling needs to be multiplexed with the downlink data in a sub frame (assuming that the user allocation can change from sub frame to sub frame). Here, it should be noted that user allocation might also be performed on a TTI (Transmission Time Interval) basis, where the TTI length may be a multiple of the sub frames. The TTI length may be fixed in a service area for all users, may be different for different users, or may even by dynamic for each user. Generally, then the L1/2 control signaling needs only be transmitted once per TTI. The L1/L2 control signalling is transmitted on the Physical Downlink Control Channel (PDCCH). It should be noted that assignments for uplink data transmissions, UL grants, are also transmitted on the PDCCH.

Generally, the information sent on the L1/L2 control signaling may be separated into the following two categories:

• Shared Control Information (SCI) carrying Cat 1 information. The SCI part of the L1/L2 control signaling contains information related to the resource allocation (indication). The SCI typically contains the following information:

∅ User identity, indicating the user which is allocated

∅ RB allocation information, indicating the resources (Resource Blocks, RBs) on which a user is allocated. Note, that the number of RBs on which a user is allocated can be dynamic.

∅ Optional: Duration of assignment, if an assignment over multiple sub frames (or TTIs) is possible
Depending on the setup of other channels and the setup of the Dedicated Control Information (DCI), the SCI may additionally contain information such as ACK/NACK for uplink transmission, uplink scheduling information, information on the DCI (resource, MCS, etc.).

- Dedicated Control Information (DCI) carrying Cat 2/3 information
The DCI part of the L1/L2 control signaling contains information related to the transmission format (Cat 2) of the data transmitted to a scheduled user indicated by Cat 1. Moreover, in case of application of (hybrid) ARQ it carries HARQ (Cat 3) information. The DCI needs only to be decoded by the user scheduled according to Cat 1. The DCI typically contains information on:

∅ Cat 2: Modulation scheme, transport block (payload) size (or coding rate) , MIMO related information, etc.

∅ Cat 3: HARQ related information, e.g. hybrid ARQ process number, redundancy version, retransmission sequence number

[0021] In the following the detailed L1/L2 control signalling information signalled for DL allocation respectively uplink assignments is described in the following:

Downlink Data Transmission:
Along with the downlink packet data transmission, L1/L2 control signaling is transmitted on a separate physical channel (PDCCH). This L1/L2 control signaling typically contains information on:

∅ The physical resource(s) on which the data is transmitted (e.g. subcarriers or subcarrier blocks in case of OFDM, codes in case of CDMA). This information allows the UE (receiver) to identify the resources on which the data is transmitted.

∅ The transport Format, which is used for the transmission. This can be the transport block size of the data (payload size, information bits size), the MCS (Modulation and Coding Scheme) level, the Spectral Efficiency, the code rate, etc.. This information (usually together with the resource allocation) allows the UE (receiver) to identify the information bit size, the modulation scheme and the code rate in order to start the demodulation, the de rate matching and the decoding process. In some cases the modulation scheme maybe signaled explicitly.

∅ Hybrid ARQ (HARQ) information:

■ Process number: Allows the UE to identify the hybrid ARQ process on which the data is mapped

■ Sequence number or new data indicator: Allows the UE to identify if the transmission is a new packet or a retransmitted packet

■ Redundancy and/or constellation version: Tells the UE, which hybrid ARQ redundancy version is used (required for de-rate matching) and/or which modulation constellation version is used (required for demodulation)

∅ UE Identity (UE ID): Tells for which UE the L1/L2 control signaling is intended for. In typical implementations this information is used to mask the CRC of the L1/L2 control signaling in order to prevent other UEs to read this information.

Uplink Data Transmission:

To enable an uplink packet data transmission, L1/L2 control signaling is transmitted on the downlink (PDCCH) to tell the UE about the transmission details. This L1/L2 control signaling typically contains information on:

∅ The physical resource(s) on which the UE should transmit the data (e.g. subcarriers or subcarrier blocks in case of OFDM, codes in case of CDMA).

∅ The transport Format, the UE should use use for the transmission. This can be the transport block size of the data (payload size, information bits size), the MCS (Modulation and Coding Scheme) level, the Spectral Efficiency, the code rate, etc.. This information (usually together with the resource allocation) allows the UE (transmitter) to pick the information bit size, the modulation scheme and the code rate in order to start the modulation, the rate matching and the encoding process. In some cases the modulation scheme maybe signaled explicitly.

∅ Hybrid ARQ information:

■ Process number: Tells the UE from which hybrid ARQ process it should pick the data

■ Sequence number or new data indicator: Tells the UE to transmit a new packet or to retransmit a packet

■ Redundancy and/or constellation version: Tells the UE, which hybrid ARQ redundancy version to use (required for rate matching) and/or which modulation constellation version to use (required for modulation)

o UE Identity (UE ID): Tells which UE should transmit data. In typical implementations this information is used to mask the CRC of the L1/L2 control signaling in order to prevent other UEs to read this information.

There are several different flavors how to exactly transmit the information pieces mentioned above. Moreover, the L1/L2 control information may also contain additional information or may omit some of the information. E.g.:

■ HARQ process number may not be needed in case of a synchronous HARQ protocol

■ A redundancy and/or constellation version may not be needed if Chase Combining is used (always the same redundancy and/or constellation version) or if the sequence of redundancy and/or constellation versions is pre defined.

■ Power control information may be additionally included in the control signaling

■ MIMO related control information, such as e.g. precoding, may be additionally included in the control signaling.

■ In case of multi-codeword MIMO transmission transport format and/or HARQ information for multiple code words may be included

For uplink resource assignments (PUSCH) signalled on PDCCH in LTE, the L1/L2 control information does not contain a HARQ process number, since a synchronous HARQ protocol is employed for LTE uplink. The HARQ process to be used for an uplink transmission is given by the timing. Furthermore it should be noted that the redundancy version (RV) information is jointly encoded with the transport format information, i.e. the RV info is embedded in the transport format (TF) field. The TF respectivley MCS field has for example a size of 5bits, which corresponds to 32 entries. 3 TF/MCS table entries are reserved for indicating RVs 1,2 or 3. The remaining MCS table entries are used to signal the MCS level (TBS) implicitly indicating RV0. The size of the CRC field of the PDCCH is 16bits. Further detailed information on the control information for uplink resource allocation on PUSCH can be found in TS36.212 section 5.3.3 and TS36.213 section 8.6.

For downlink assignments (PDSCH) signalled on PDCCH in LTE the Redundancy Version (RV) is signalled separately in a two-bit field. Furthermore the modulation order information is jointly encoded with the transport format information. Similar to the uplink case there is 5bit MCS field signalled on PDCCH. 3 of the entries are reserved to signal an explicit modulation order, providing no Transport format (Transport block) info. For the remaining 29 entries modulation order and Transport block size info are signalled. Further detailed information on the control information for uplink resource allocation on PUSCH can be found in TS36.212 section 5.3.3 and TS36.213 section 7.1.7

**Random Access Procedure**

A mobile terminal in LTE can only be scheduled for uplink transmission, if its uplink transmission is time synchronized. Therefore the Random Access (RACH) procedure plays an important role as an interface between non-synchronized mobile terminals (UEs) and the orthogonal transmission of the uplink radio access.

Essentially the Random Access in LTE is used to achieve uplink time synchronization for a user equipment which either has not yet acquired, or has lost, its uplink synchronization. Once a user equipment has achieved uplink synchronization, the eNodeB can schedule uplink transmission resources for it. The following scenarios are therefore relevant for random access:

- A user equipment in RRC_CONNECTED state, but not uplink-synchronized, wishing to send new uplink data or control information

- A user equipment in RRC_CONNECTED state, but not uplink-synchronized, required to receive downlink data, and therefore to transmit corresponding HARQ feedback, i.e. ACK/NACK, in the uplink. This scenario is also referred to as Downlink data arrival

- A user equipment in RRC_CONNECTED state, handing over from its current serving cell to a new target cell; in order to achieve uplink time-synchronization in the target cell, Random Access procedure is performed

- A transition from RRC_IDLE state to RRC_CONNECTED, for example for initial access or tracking area updates

- Recovering from radio link failure, i.e. RRC connection re-establishment

There is one more additional case, where user equipment performs random access procedure, even though user equipment is time-synchronized. In this scenario the user equipment uses the random access procedure in order to send a scheduling request, i.e. uplink buffer status report, to its eNodeB, in case it does not have any other uplink resource allocated in which to send the scheduling request, i.e. dedicated scheduling request (D-SR) channel is not configured.

LTE offers two types of random access procedures allowing access to be either contention based, i.e. implying an inherent risk of collision, or contention-free (non-contention based). It should be noted that contention-based random access can be applied for all five scenarios listed above, whereas a non-contention based random access procedure can only be applied for the downlink data arrival and handover scenario.

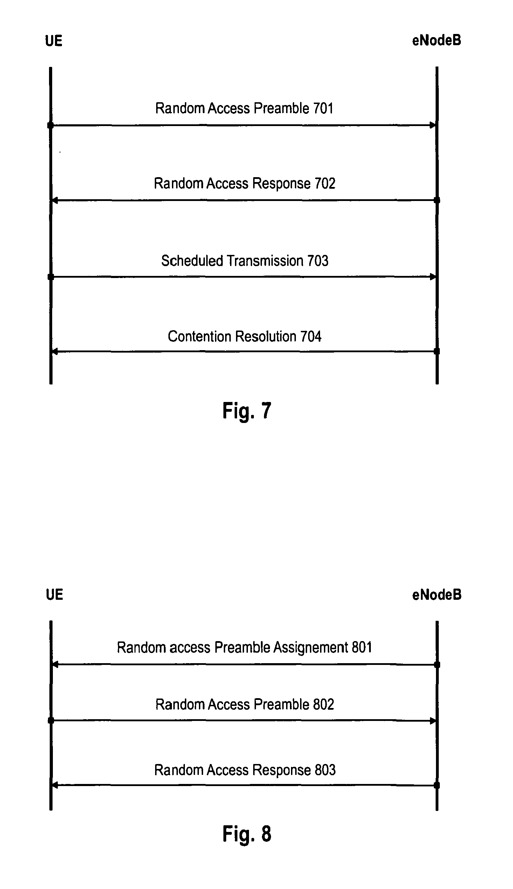

In the following the contention based random access procedure is being described in more detail with respect to Fig. 7. A detailed description of the random access procedure can be also found in 3GPP 36.321, section 5.1.

Fig. 7 shows the contention based RACH procedure of LTE. This procedure consists of four "steps". First, the user equipment transmits 701 a random access preamble on the Physical Random Access Channel (PRACH) to the eNodeB. The preamble is selected by user equipment from the set of available random access preambles reserved by eNodeB for contention based access. In LTE, there are 64 preambles per cell which can be used for contention-free as well as contention based random access. The set of contention based preambles can be further subdivided into two groups, so that the choice of preamble can carry one bit of information to indicate information relating to the amount of transmission resources needed for the first scheduled transmission, which is referred to as msg3 in TS36.321 (see step 703). The system information broadcasted in the cell contain the information which signatures (preambles) are in each of the two subgroups as well as the meaning of each subgroup. The user equipment randomly selects one preamble from the subgroup corresponding to the size of transmission resource needed for message 3 transmission.

The initial preamble transmission power setting is based on an open-loop estimation with full compensation of the path loss. This is designed to ensure that the received power of the preambles is independent of the path-loss.

The eNB may also configure an additional power offset, depending for example on the desired received SINR, the measured uplink interference and noise level in the time-frequency slots allocated to RACH preambles, and possibly on the preamble format. Furthermore, the eNB may configure preamble power ramping so that the transmission for each retransmitted preamble, i.e. in case the PRACH transmission attempt was not successfully, is increased by a fixed step.

The PRACH power is determined by UE through evaluation of

$$\text{PPRACH} = \min\{\ P_{CMAX,c}(i),\ PREAMBLE\_RECEIVED\_TARGET\_POWER + PL_C\}[dBm],$$

where $P_{CMAX,c}(i)$ is the configured maximum UE transmit power for subframe i of the primary cell and $PL_c$ is the downlink pathloss estimate calculated in the UE for the primary cell. PREAMBLE_RECEIVED_TARGET_POWER is set to:

preambleInitialReceivedTargetPower + DELTA_PREAMBLE +

(PREAMBLE_TRANSMISSION_COUNTER – 1) * powerRampingStep.

After eNodeB has detected a RACH preamble, it sends 702 a Random Access Response (RAR) message on the PDSCH (Physical Downlink Shared Channel) addressed on the PDCCH with the (Random Access) RA-RNTI identifying the time-frequency slot in which the preamble was detected. If multiple user equipments transmitted the same RACH preamble in the same PRACH resource, which is also referred to as collision, they would receive the same random access response.

The RAR message conveys the detected RACH preamble, a timing alignment command (TA command) for synchronization of subsequent uplink transmissions, an initial uplink resource assignment (grant) for the transmission of the first scheduled transmission (see step 703) and an assignment of a Temporary Cell Radio Network Temporary Identifier (T-CRNTI). This T-CRNTI is used by eNodeB in order to address the mobile(s) whose RACH preamble were detected until RACH procedure is finished, since the "real" identity of the mobile is at this point not yet known by eNodeB.

Furthermore the RAR message can also contain a so-called back-off indicator, which the eNodeB can set to instruct the user equipment to back off for a period of time before retrying a random access attempt. The user equipment monitors the PDCCH for reception of random access response within a given time window, which is configured by the eNodeB. In case user equipment doesn't receive a random access response within the configured time window, it retransmits the preamble at the next PRACH opportunity considering a potentially back off period.

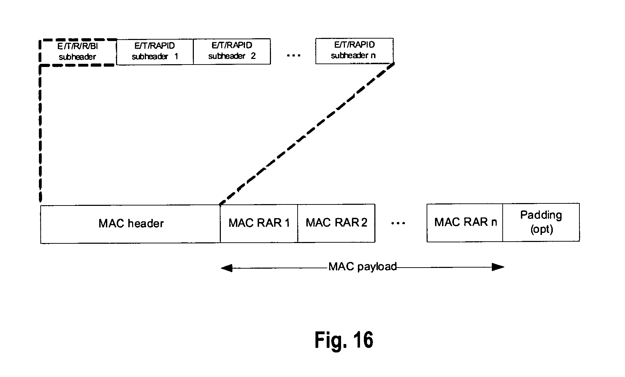

Further details of the RACH response MAC PDU are given in the following. It consists of a MAC header and zero or more MAC Random Access Responses (MAC RAR) and optionally padding as shown in Fig. 16.

The MAC header is of variable size. A MAC PDU header itself consists of one or more MAC PDU subheaders; each subheader corresponding to a MAC RAR except for the Backoff Indicator subheader. If included, the Backoff Indicator subheader is only included once and is the first subheader included within the MAC PDU header.

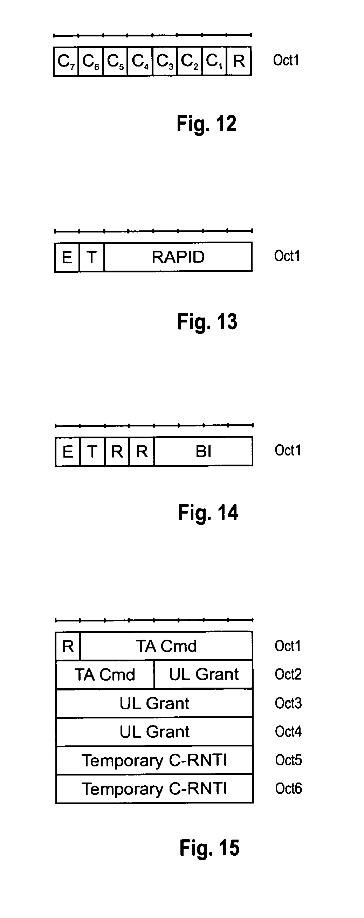

A MAC PDU subheader consists of the three header fields E/T/RAPID (as illustrated in Fig. 13) but for the Backoff Indicator subheader which consists of the five header field E/T/R/R/BI (as shown in Fig. 14).

A MAC RAR consists of the four fields R/Timing Advance Command/UL Grant/Temporary C-RNTI (as shown in Fig. 15).

Padding may occur after the last MAC RAR. Presence and length of padding is implicit based on TB size, size of MAC header and number of RARs.

In response to the RAR message received from the eNodeB, the user equipment transmits 703 the first scheduled uplink transmission on the resources assigned by the grant within the random access response. This scheduled uplink transmission conveys the actual random access procedure message like for example RRC connection request, tracking area update or buffer status report. Furthermore it includes either the C-RNTI for user equipments in RRC_CONNECTED mode or the unique 48-bit user equipment identity if the user equipments are in RRC_IDLE mode. In case of a preamble collision having occurred in step 701, i.e. multiple user equipments have sent the same preamble on the same PRACH resource, the colliding user equipments will receive the same T-CRNTI within the random access response and will also collide in the same uplink resources when transmitting 703 their scheduled transmission. This may result in interference that no transmission from a colliding user equipment can be decoded at the eNodeB, and the user equipments will restart the random access procedure after having reached maximum number of retransmission for their scheduled transmission. In case the scheduled transmission from one user equipment is successfully decoded by eNodeB, the contention remains unsolved for the other user equipments.

For resolution of this type of contention, the eNode B sends 704 a contention resolution message addressed to the C-RNTI or Temporary C-RNTI, and, in the latter case, echoes the 48-bit user equipment identity contained the scheduled transmission of step 703. It supports HARQ. In case of collision followed by a successful decoding of the message sent in step 703, the HARQ feedback (ACK) is only transmitted by the user equipment which detects its own identity, either C-RNTI or unique user equipment ID. Other UEs understand that there was a collision at step 1 and can quickly exit the current RACH procedure and start another one.

Fig. 8 is illustrating the contention-free random access procedure of 3GPP LTE Rel. 8/9. In comparison to the contention based random access procedure, the contention-free random access procedure is simplified. The eNodeB provides 801 the user equipment with the preamble to use for random access so that there is no risk of collisions, i.e. multiple user equipment transmitting the same preamble. Accordingly, the user equipment is sending 802 the preamble which was signaled by eNodeB in the uplink on a PRACH resource. Since the case that multiple UEs are sending the same preamble is avoided for a contention-free random access, no contention resolution is necessary, which in turn implies that step 704 of the contention based procedure shown in Fig. 7 can be omitted. Essentially a contention-free random access procedure is finished after having successfully received the random access response.

The so-called RACH order is a PDCCH with DCI format 1 A where specific codepoints are set to predefined values in order to distinguish the RACH ordering from normal downlink resource allocation. As already mentioned the RACH order indicates the preamble to be used by the mobile terminal for the RACH access. Alternatively the RACH order /PDCCH order could also trigger a contention based RACH access, i.e. by means of indicating a ra-PreambleIndex (Random Access Preamble) value equal to 000000.

When carrier aggregation is configured, the first three steps of the contention-based random access procedure occur on the PCell, while contention resolution (step 704) can be cross-scheduled by the PCell.

**Timing Advance**

For the uplink transmission scheme of 3GPP LTE single-carrier frequency division multiple access (SC-FDMA) was chosen to achieve an orthogonal multiple-access in time and frequency between the different user equipments transmitting in the uplink.

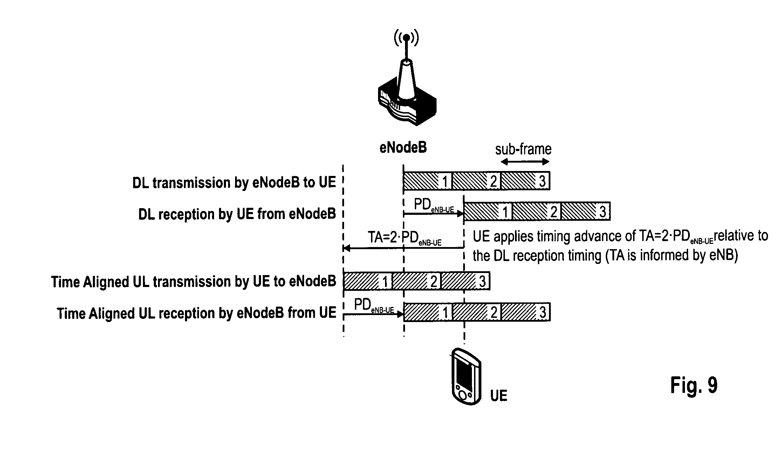

Uplink orthogonality is maintained by ensuring that the transmissions from different user equipments in a cell are time-aligned at the receiver of the eNodeB. This avoids intra-cell interference occurring, both between user equipments assigned to transmit in consecutive sub-frames and between user equipments transmitting on adjacent subcarriers. Time alignment of the uplink transmissions is achieved by applying a timing advance at the user equipment's transmitter, relative to the received downlink timing as exemplified in Fig. 9. The main role of this is to counteract differing propagation delays between different user equipments.

*Initial Timing Advance Procedure*

When user equipment is synchronized to the downlink transmissions received from eNodeB, the initial timing advance is set by means of the random access procedure as described above. The user equipment transmits a random access preamble based on which the eNodeB can estimate the uplink timing. The eNodeB responds with an 11-bit initial timing advance command contained within the Random Access Response (RAR) message. This allows the timing advance to be configured by the eNodeB with a granularity of 0.52 $\mu$s from 0 up to a maximum of 0.67 ms.

Additional information on the control of the uplink timing and timing advance on 3GPP LTE (Release 8/9) can be found in chapter 20.2 of Stefania Sesia, Issam Toufik and Matthew Baker, "LTE - The UMTS Long Term Evolution: From Theory to Practice", John Wiley & Sons, Ltd. 2009, which is incorporated herein by reference.

*Updates of the Timing Advance*

Once the timing advance has been first set for each user equipment, the timing advance is updated from time to time to counteract changes in the arrival time of the uplink signals at the eNodeB. In deriving the timing advance update commands, the eNodeB may measure any uplink signal which is useful. The details of the uplink timing measurements at the eNodeB are not specified, but left to the implementation of the eNodeB.

The timing advance update commands are generated at the Medium Access Control (MAC) layer in the eNodeB and transmitted to the user equipment as MAC control elements which may be multiplexed together with data on the Physical Downlink Shared Channel (PDSCH). Like the initial timing advance command in the response to the Random Access Channel (RACH) preamble, the update commands have a granularity of 0.52 $\mu$s. The range of the update commands is $\pm$16 $\mu$s, allowing a step change in uplink timing equivalent to the length of the extended cyclic prefix. They would typically not be sent more frequently than about every 2 seconds. In practice, fast updates are unlikely to be necessary, as even for a user equipment moving at 500 km/h the change in round-trip path length is not more than 278 m/s, corresponding to a change in round-trip time of 0.93 $\mu$s/s.

The eNodeB balances the overhead of sending regular timing update commands to all the UEs in the cell against a UE's ability to transmit quickly when data arrives in its transmit buffer. The eNodeB therefore configures a timer for each user equipment, which the user equipment restarts each time a timing advance update is received. In case the user equipment does not receive another timing advance update before the timer expires, it must then consider that it has lost uplink synchronization (see also section 5.2 of 3GPP TS 36.321, "Evolved Universal Terrestrial Radio Access (E-UTRA); Medium Access Control (MAC) protocol specification", version 10.2.0, available at http://www.3gpp.org and incorporated herein by reference).

In such a case, in order to avoid the risk of generating interference to uplink transmissions from other user equipments, the UE is not permitted to make uplink transmissions of any sort (except the transmission of a random access preamble) and needs to revert to the initial timing alignment procedure in order to restore the uplink timing.

Upon reception of a timing advance command, the user equipment shall adjust its uplink transmission timing for PUCCH/PUSCH/SRS of the primary cell. The timing advance command indicates the change of the uplink timing relative to the current uplink timing as multiples of 16 $T_s$.

**Uplink Power Control**

Uplink transmission power control in a mobile communication system serves an important purpose: it balances the need for sufficient transmitted energy per bit to achieve the required Quality-of-Service (QoS), against the needs to minimize interference to other users of the system and to maximize the battery life of the mobile terminal. In achieving this purpose, the role of the Power Control (PC) becomes decisive to provide the required SINR while controlling at the same time the interference caused to neighbouring cells. The idea of classic PC schemes in uplink is that all users are received with the same SINR, which is known as full compensation. As an alternative, 3GPP has adopted for LTE the use of Fractional Power Control (FPC). This new functionality makes users with a higher path-loss operate at a lower SINR requirement so that they will more likely generate less interference to neighbouring cells.

Detailed power control formulae are specified in LTE for the Physical Uplink Shared Channel (PUSCH), Physical Uplink Control Channel (PUCCH) and the Sounding Reference Signals (SRSs) (section 5.1 in TS36.213). The formula for each of these uplink signals follows the same basic principles; in all cases they can be considered as a summation of two main terms: a basic open-loop operating point derived from static or semi-static parameters signalled by the eNodeB, and a dynamic offset updated from subframe to subframe.

The basic open-loop operating point for the transmit power per resource block depends on a number of factors including the inter-cell interference and cell load. It can be further broken down into two components, a semi-static base level P0, further comprised of a common power level for all UEs in the cell (measured in dBm) and a UE-specific offset, and an open-loop path-loss compensation component. The dynamic offset part of the power per resource block can also be further broken down into two components, a component dependent on the MCS and explicit Transmitter Power Control (TPC) commands.

The MCS-dependent component (referred to in the LTE specifications as $\Delta_{TF}$, where TF stands for 'Transport Format') allows the transmitted power per RB to be adapted according to the transmitted information data rate.

The other component of the dynamic offset is the UE-specific TPC commands. These can operate in two different modes: accumulative TPC commands (available for PUSCH, PUCCH and SRS) and absolute TPC commands (available for PUSCH only). For the PUSCH, the switch between these two modes is configured semi-statically for each UE by RRC signalling - i.e. the mode cannot be changed dynamically. With the accumulative TPC commands, each TPC command signals a power step relative to the previous level.

The formula below shows the UE transmit power, expressed in dBm, for PUSCH:

$$P = \min\left[P_{MAX}, 10 \cdot \log_{10} M + P_{0\_PUSCH} + \alpha \cdot PL + \Delta_{MCS} + f(\Delta_i)\right] \text{ dBm]}$$

∅ PMAX is the maximum UE power which depends on the UE class.

∅ M is the number of allocated physical resource blocks (PRBs).

∅ PL is the UE path loss derived at the UE based on RSRP measurement and signalled RS eNode-B transmission power.

∅ $\Delta_{MCS}$ is an MCS-dependent power offset set by the eNB.

∅ $P_{0\_PUSCH}$ is a UE-specific parameter (partially broadcasted and partially signalled using RRC).

∅ $\alpha$ is cell-specific parameter (broadcasted on BCH).

∅ $\Delta_i$ are closed loop PC commands signalled from the eNode-B to the UE

∅ function f ( ) indicates whether closed loop commands are relative accumulative or absolute. f ( ) is signalled to the UE via higher layers.

**Further Advancements for LTE (LTE-A)**

The frequency spectrum for IMT- Advanced was decided at the World Radiocommunication Conference 2007 (WRC- 07) . Although the overall frequency spectrum for IMT- Advanced was decided, the actual available frequency bandwidth is different according to each region or country. Following the decision on the available frequency spectrum outline, however, standardization of a radio interface started in the 3rd Generation Partnership Project (3GPP) . At the 3GPP TSG RAN #39 meeting, the Study Item description on "Further Advancements for E- UTRA (LTE- Advanced) " was approved. The study item covers technology components to be considered for the evolution of E- UTRA, e.g. to fulfill the requirements on IMT- Advanced. Two major technology components which are currently under consideration for LTE- A are described in the following.

*Carrier Aggregation in L TE-A for support of wider bandwidth*

The bandwidth that the LTE-Advanced system is able to support is 100 MHz, while an LTE system can only support 20 MHz. Nowadays, the lack of radio spectrum has become a bottleneck of the development of wireless networks, and as a result it is difficult to find a spectrum band which is wide enough for the LTE-Advanced system. Consequently, it is urgent to find a way to gain a wider radio spectrum band, wherein a possible answer is the carrier aggregation functionality.

In carrier aggregation, two or more component carriers (component carriers) are aggregated in order to support wider transmission bandwidths up to 100MHz. Several cells in the LTE system are aggregated into one wider channel in the LTE-Advanced system which is wide enough for 100 MHz even though these cells in LTE are in different frequency bands.

All component carriers can be configured to be LTE Rel. 8/9 compatible, at least when the aggregated numbers of component carriers in the uplink and the downlink are the same. Not all component carriers aggregated by a user equipment may necessarily be Rel. 8/9 compatible. Existing mechanism (e.g. barring) may be used to avoid Rel-8/9 user equipments to camp on a component carrier.

A user equipment may simultaneously receive or transmit one or multiple component carriers (corresponding to multiple serving cells) depending on its capabilities. A LTE-A Rel. 10 user equipment with reception and/or transmission capabilities for carrier aggregation can simultaneously receive and/or transmit on multiple serving cells, whereas an LTE Rel. 8/9 user equipment can receive and transmit on a single serving cell only, provided that the structure of the component carrier follows the Rel. 8/9 specifications.

Carrier aggregation is supported for both contiguous and non-contiguous component carriers with each component carrier limited to a maximum of 110 Resource Blocks in the frequency domain using the Rel. 8/9 numerology. It is possible to configure a user equipment to aggregate a different number of component carriers originating from the same eNodeB and of possibly different bandwidths in the uplink and the downlink:

- The number of downlink component carriers that can be configured depends on the downlink aggregation capability of the user equipment;

- The number of uplink component carriers that can be configured depends on the uplink aggregation capability of the user equipment;

- It is not possible to configure a user equipment with more uplink component carriers than downlink component carriers;

- In typical TDD deployments, the number of component carriers and the bandwidth of each component carrier in uplink and downlink is the same.

Component carriers originating from the same eNodeB need not to provide the same coverage.

The spacing between centre frequencies of contiguously aggregated component carriers shall be a multiple of 300 kHz. This is in order to be compatible with the 100 kHz frequency raster of Rel. 8/9 and at the same time preserve orthogonality of the subcarriers with 15 kHz spacing. Depending on the aggregation scenario, the n x 300 kHz spacing can be facilitated by insertion of a low number of unused subcarriers between contiguous component carriers.

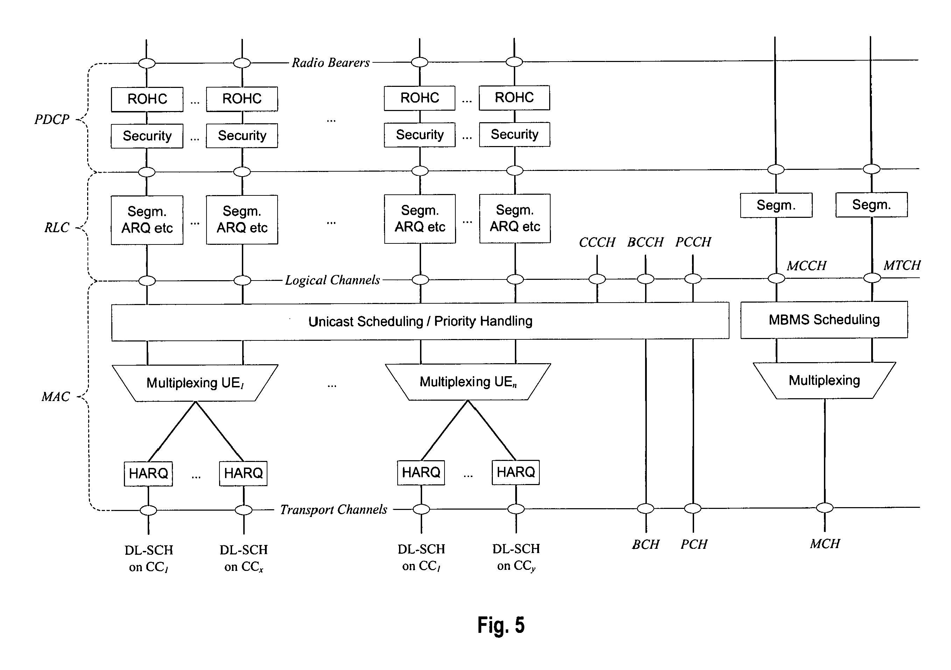

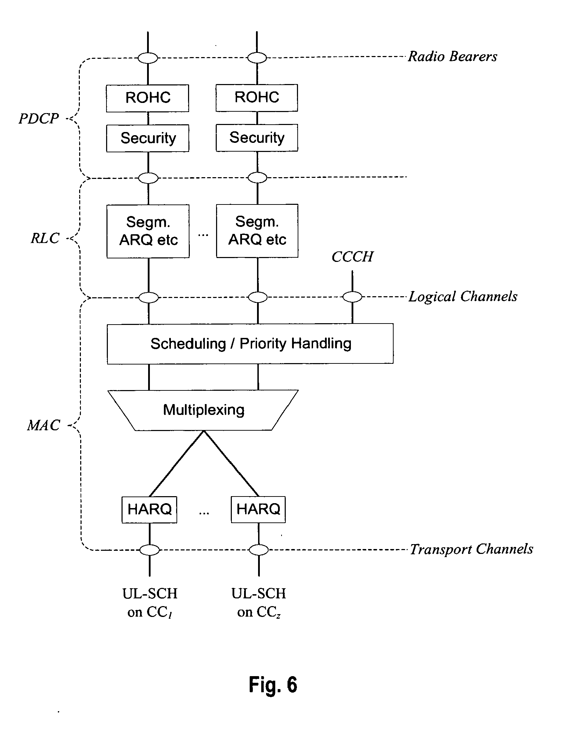

The nature of the aggregation of multiple carriers is only exposed up to the MAC layer. For both uplink and downlink there is one HARQ entity required in MAC for each aggregated component carrier. There is (in the absence of SU-MIMO - Single User Multiple Input Multiple Output - for uplink) at most one transport block per component carrier. A transport block and its potential HARQ retransmissions need to be mapped on the same component carrier. The Layer 2 structure with activated carrier aggregation is shown in Fig. 5 and Fig. 6 for the downlink and uplink respectively.

When carrier aggregation is configured, the user equipment only has one RRC connection with the network. At RRC connection establishment/re-establishment, one serving cell provides the security input (one ECGI, one PCI and one ARFCN) and the non-access stratum mobility information (e.g. TAI) similarly as in LTE Rel. 8/9. After RRC connection establishment/re-establishment, the component carrier corresponding to that cell is referred to as the downlink Primary Cell (PCell). There is always one and only one downlink PCell (DL PCell) and one uplink PCell (UL PCell) configured per user equipment in connected mode. In the downlink, the carrier corresponding to the PCell is the Downlink Primary Component Carrier (DL PCC), while in the uplink it is the Uplink Primary Component Carrier (UL PCC).

Depending on the user equipment's capabilities, Secondary Cells (SCells) can be configured to form a set of serving cells, together with the PCell. Therefore, the configured set of serving cells for a user equipment always consists of one PCell and one or more SCells. The characteristics of the downlink and uplink PCell and SCells are

- The uplink PCell is used for transmission of Layer 1 uplink control information (PUCCH)

- Unlike SCells, the downlink PCell cannot be de-activated

- Re-establishment is triggered when the downlink PCell experiences Rayleigh fading (RLF), not when downlink SCells experience RLF

- For each SCell the usage of uplink resources by the UE in addition to the downlink ones is configurable (the number of DL SCCs configured is therefore always larger or equal to the number of UL SCells and no SCell can be configured for usage of uplink resources only)

- From a UE viewpoint, each uplink resource only belongs to one serving cell

- PCell can only be changed with handover procedure (i.e. with security key change and RACH procedure)

- The number of serving cells that can be configured depends on the aggregation capability of the UE

- Non-access stratum information is taken from the downlink PCell.

The reconfiguration, addition and removal of SCells can be performed by RRC. At intra-LTE handover, RRC can also add, remove, or reconfigure SCells for usage with the target PCell. When adding a new SCell, dedicated RRC signaling is used for sending all required system information of the SCell, i.e. while in connected mode, user equipments need not acquire broadcast system information directly from the SCells.

When carrier aggregation is configured, a user equipment may be scheduled over multiple component carriers simultaneously, but at most one random access procedure should be ongoing at any time. Cross-carrier scheduling allows the Physical Downlink Control Channel (PDCCH) of a component carrier to schedule resources on another component carrier. For this purpose a component carrier identification field (CIF) is introduced in the respective Downlink Control Information (DCI) formats. A linking between uplink and downlink component carriers allows identifying the uplink component carrier for which the grant applies when there is no-cross-carrier scheduling. The linkage of downlink component carriers to uplink component carriers does not necessarily need to be one to one. In other words, more than one downlink component carrier can link to the same uplink component carrier. At the same time, a downlink component carrier can only link to one uplink component carrier.

### Activation/Deactivation of SCells

To enable reasonable UE battery consumption when CA is configured, an activation/deactivation mechanism of SCells is supported (i.e. activation/deactivation does not apply to PCell). When an SCell is deactivated, the UE does not need to receive the corresponding PDCCH or PDSCH, cannot transmit in the corresponding uplink, nor is it required to perform CQI measurements. Conversely, when an SCell is active, the UE shall receive PDSCH and PDCCH (if the UE is configured to monitor PDCCH from this SCell), and is expected to be able to perform CQI measurements.

The activation/deactivation mechanism is based on the combination of a MAC control element and deactivation timers. The MAC control element carries a bitmap for the activation and deactivation of SCells: a bit set to 1 denotes activation of the corresponding SCell, while a bit set to 0 denotes deactivation. With the bitmap, SCells can be activated and deactivated individually, and a single activation/deactivation command can activate/deactivate a subset of the SCells. The corresponding activation/deactivation MAC CE is shown in Fig. 12. It should be noted, that even though there is a maxmimum of 4 SCells a UE can aggregate, the MAC CE contains 7 entries, each of them corresponding to an SCell configured with SCellIndex i.

One deactivation timer is maintained per SCell but one common value is configured per UE by RRC. At reconfiguration without mobility control information:

  o SCells added to the set of serving cells are initially "deactivated";

o SCells which remain in the set of serving cells (either unchanged or reconfigured) do not change their activation status ("activated" or "deactivated").

At reconfiguration with mobility control information (i.e. handover):

o SCells are "deactivated".

**Multiple Timing Advance**

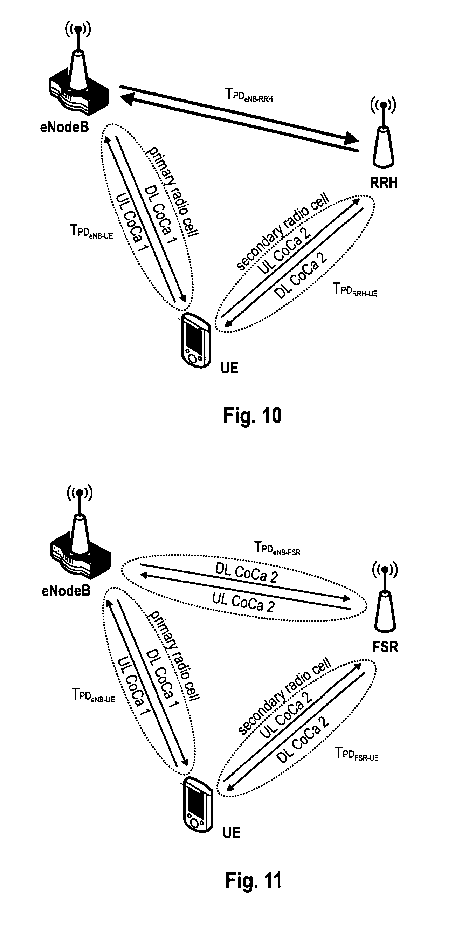

In currents specifications (Rel-10) of the 3GPP standards the UE only maintains one timing advance value and applies this to UL transmissions on all aggregated component carriers. Only the aggregagtion of cells within the same frequency band, also referred to as intra-frequency carrier aggregation, is supported. Basically uplink timing synchronization is performed for Pcell, e.g. by RACH procedure on Pcell, and UE uses same uplink timing for uplink transmissions on aggregated Scells. However in Rel-11when uplink component cells are aggregated from different bands, they can experience different channel, interference and coverage characteristics. Furthermore deployment scenarios with frequency selective repeaters (as shown in Fig. 11) or remote radio heads (as shown in Fig. 10) may require a separate timing advance for certain serving cells due to different propagation delays among the aggregated serving cells.

There might be a separate timing advance for each aggregated serving cell respectively cells are grouped and then each group has a separate timing advance. Essentially (serving) cells having UL to which the same TA applies (typically corresponding to the serving cells hosted by the same receiver) and using the same timing reference are grouped in a so called Timing Advance (TA) group. Each TA group contains at least one serving cell with configured uplink, and the mapping of each serving cell to a TA group is configured by the serving eNB with RRC signaling. Presumable when an SCell is configured for aggregation, eNB will assign the SCell the TA group it belongs to. The mapping between a SCell and a TA group may be reconfigured with RRC signaling. A UE supporting multiple TAs is required to support at least 2 TA groups; i.e. one TA group containing the PCell (pTAG) and one or more TA groups not containing the PCell (sTAG).

With respect to TA maintenance:

- TA maintenance and the timing reference for pTAG follows the Rel-10 principles, e.g. RACH is only performed on PCell within the pTAG;

- To obtain initial UL time alignment for a sTAG, eNB initiated RA procedure should be used;

- The timing reference for all SCells in an sTAG shall be the SIB2 linked downlink of the SCell on which the preamble for the latest RA procedure was sent

- There is one timing reference and one time alignment timer (TAT) per TA group and each TAT may be configured with a different value;

- When the TAT associated with the pTAG expires, all TATs are considered as expired and the UE flushes all HARQ buffers of all serving cells, clears any configured downlink assignment/uplink grants, and RRC releases PUCCH/SRS for all configured serving cells as in Rel-10;

- When the TAT associated with a sTAG expires:

    o SRS transmissions are stopped on the corresponding SCells;

    o The type-0 SRS configuration is released, but the type-1 SRS configuration is maintained;

    o CSI reporting configuration for the corresponding SCells is maintained;

    o MAC flushes the uplink HARQ buffers of the corresponding SCells;

- Upon deactivation of the last SCell in a sTAG, UE does not stop TAT of the TA group;

- Upon removal of the last SCell in a sTAG, TAT of the TA group should not be running.

As already mentioned UE needs to support RACH procedure on SCell for the multi-TA case. It should be noted that parallel RACH procedures shall not be supported by a UE. More in particular if a new RA procedure is requested (either by UE or network) while another RA procedure is already ongoing, it is up to the UE implementation whether to continue with the ongoing procedure or start with the new procedure. With respect to the RA procedure on SCell(s) within an sTAG, only eNB can initiate or respectively order a non-contention based RA procedure via a PDCCH order (format 1A DCI) for an activated SCell. This PDCCH order is sent on the scheduling cell of this SCell. A contention-based RACH procedure on an SCell is not supported. Upon new UL data arrival the UE shall not trigger an RA procedure on an SCell. The PDCCH for Msg2 (RACH response message) can be sent on a different serving cell than the SCell in which the preamble was sent. Furthermore upon reaching the maximum number of transmitted preambles, MAC layer does not indicate it to RRC i.e. RLF is not triggered (this is different to RACH procedure on Pcell).

With respect to the pathloss reference handling for uplink transmissions, the pathloss reference handling of pTAG follows REL-10 principles. For each uplink in an sTAG, the SIB2 linked downlink of the SCell is used as a pathloss reference.

As described above the need to perform downlink timing reference cell change and to assess the timing of a cell in a SCell Timing Alignment Group (sTAG) are coupled in the prior-art.

The coupling forces both procedures to take place when only one would be sufficient. Under certain circumstances, the 'other' procedure is un-necessary but also be detrimental. For example, when the radio network would 'only' like to assess the timing-advance with respect to a particular cell in a Timing Alignment Group, a change of DL Timing Reference Cell to this cell may be un-desirable (even detrimental) since this cell's Timing Advance is not aligned (different by the common TA by a certain margin) with the timing advance of the rest of the cells in the same group.

Similarly, at certain occasions the radio network could simply change the DL Timing Reference Cell without un- necessarily invoking a Random Access Procedure; this can happen when the radio network need not assess the TA of the new DL Timing Reference Cell (e.g. if it is confident about the timing relation of the new DL Timing Reference Cell or when the new DL Timing Reference Cell would be the only remaining cell in the TA subsequent to an impending procedure) .

Also, the prior- art is not optimized from Signaling perspective such that more than one layer 1, layer 2 and layer 3 signaling messages are sent for the said purpose when only one would suffice.

## SUMMARY OF THE INVENTION

The present invention strives to avoid the various disadvantages mentioned above.

One object of the invention is to propose a mechanism for re-configuration of a timing advance group by assigning a downlink timing candidate cell to become the downlink timing reference cell without reverting to the contention-free RACH procedure.

To achieve this and according to a first aspect, the invention defines a subset of predefined preamble indices for a random access procedure, wherein an UE, upon reception of a signaling/control message including one predefined preamble index that is part of the subset, reconfigures the timing advance group by assigning the downlink timing candidate cell, for which the preamble index was received, to become the new downlink timing reference cell of the timing advance group.

Another object of the invention is to provide for mechanism to test/probe of the propagation delay (or Timing Advance) for a different cell than the downlink timing reference cell by the eNodeB without immediate reconfiguration of the timing advance group, namely without assigning the tested cell to become the new downlink timing reference cell of the timing advance group.

To achieve this and according to a second aspect, the invention defines another subset of predefined preamble indices for a random access procedure, wherein an UE, upon reception of a signaling/control message including one predefined preamble index that is part of the other subset, the mobile terminal initiates the random access procedure by transmitting a random access preamble corresponding to the received preamble index for the downlink timing candidate cell to the aggregation access point and maintains the configuration of the timing advance group.

In the invention, the subset of predefined preamble of the first aspect and the other subset of the second aspect are complementary.

The first and second aspect can be readily combined with each other as will become apparent from the detailed description.

The present invention provides a method for re-configuration of a timing advance group by a mobile terminal in a mobile communication system. The mobile terminal is in communication with an aggregation access point and configured with a timing advance group including a downlink timing reference cell and a downlink timing candidate cell. The mobile terminal receives a signalling/control message for the downlink timing candidate cell, wherein the signalling/ control message includes a preamble index for a random access procedure. In case the received preamble index for the random access procedure is not part of a subset of predefined preamble indices, the mobile terminal initiates the random access procedure by transmitting a random access preamble corresponding to the received preamble index for the downlink timing candidate cell to the aggregation access point and maintains the configuration of the timing advance group until the mobile terminal receives re-configuration information for the timing advance group. In case the received preamble index for the random access procedure is part of the subset of predefined preamble indices, the mobile terminal re-configures the timing advance group by assigning the downlink timing candidate cell, for which the preamble index for the random access procedure was received, to become the new downlink timing reference cell of the timing advance group.

According to an advantageous embodiment of the invention which can be used in addition or alternatively to the above, the mobile terminal receives the re-configuration information for the timing advance group as a random access response message from the aggregated access point including reconfiguration information in response to the transmission of the random access preamble.

According to an advantageous embodiment of the invention which can be used in addition or alternatively to the above, the signalling/control message including a preamble index for a random access procedure is a downlink control information (DCI) message.

According to an advantageous embodiment of the invention which can be used in addition or alternatively to the above, the signalling/control message including a preamble index for a random access procedure is a RRC connection configuration message.

According to an advantageous embodiment of the invention which can be used in addition or alternatively to the above, upon re-configuration of the timing advance group by the mobile terminal, the mobile terminal acknowledges reception of the signalling/control message including the preamble index for a random access procedure.

According to an advantageous embodiment of the invention which can be used in addition or alternatively to the above, in case the signalling/control message including a preamble index for a random access procedure is a RRC connection configuration message, the mobile terminal acknowledges reception of the signalling/control message including the preamble index for a random access procedure by transmitting a RRC connection reconfiguration complete message.

According to an advantageous embodiment of the invention which can be used in addition or alternatively to the above, upon transmission of the random access preamble corresponding to the received preamble index for the newly assigned downlink timing reference cell by the mobile terminal to the aggregation access point, the aggregation access point transmits a random access response message including a timing advance command and an information for requesting or non-requesting the mobile terminal to:

re-configure the timing advance group by assigning the downlink timing candidate cell, for which the preamble index for the random access procedure was received, to become the new downlink timing reference cell of the timing advance group, and to

time-align the new downlink timing reference cell using the received timing advance command.

According to an advantageous embodiment of the invention which can be used in addition or alternatively to the above, upon reception by the mobile terminal of a random access response message including a timing advance command and a request information, the mobile terminal:

re-configures the timing advance group by assigning the downlink timing candidate cell, for which the preamble index for the random access procedure was received, to become the new downlink timing reference cell of the timing advance group, and

time-aligns the new downlink timing reference cell using the received timing advance command.

According to an advantageous embodiment of the invention which can be used in addition or alternatively to the above, upon reception by the mobile terminal of a random access response message including a timing advance command and a non-request information, the mobile terminal neither re-configures the timing advance group by assigning a new downlink timing reference cell nor time-aligns the downlink timing reference cell.

According to an advantageous embodiment of the invention which can be used in addition or alternatively to the above, after elapse of a predetermined timeout after transmission of the random access preamble including the received preamble index for the downlink timing candidate cell to the aggregation access point, the mobile terminal maintains the downlink timing reference cell.

According to an advantageous embodiment of the invention which can be used in addition or alternatively to the above, the request / non-request information is included in the reserved-Bit of the random access response message.

According to an advantageous embodiment of the invention which can be used in addition or alternatively to the above, in case the reserved-Bit has a first value, the mobile terminal is requested to re-configure the timing advance group by assigning the new downlink timing reference cell and to time-align the new downlink timing reference cell. In case the reserved-Bit has a second value, the mobile terminal is not-requested to re-configure the timing advance group and neither assigns a new downlink timing reference cell nor time-aligns the new downlink timing reference cell.

According to an advantageous embodiment of the invention which can be used in addition or alternatively to the above, in case the mobile terminal receives a signalling/control message for the downlink timing candidate cell, wherein the signalling/control message includes a preamble index for a random access procedure which is not equal to a subset of predefined preamble indices, the mobile terminal in response to a transmission of the random access preamble receives a random access response message from the aggregated access point including a timing advance command, a request information and a timing advance group assignment information. Further, the mobile terminal re-configures another timing advance group by assigning the downlink timing candidate cell, for which the preamble index for the random access procedure was received, to become a member of the other timing advance group indicated by the timing advance group assignment information. Further, the mobile terminal does not time-align the downlink timing reference cell using the received timing advance command. Further, the mobile terminal does not re-configure the timing advance group by assigning a new downlink timing reference cell.

The present invention further provides a mobile terminal for re-configuring a timing advance group in a mobile communication system. The mobile terminal is in communication with an aggregation access point and is configured with a timing advance group including a downlink timing reference cell and a downlink timing candidate cell. A receiver of the mobile terminal receives a signalling/control message for the downlink timing candidate cell, the signalling/control message including a preamble index for a random access procedure. A transmitter of the mobile terminal transmits a random access preamble. A processor of the mobile terminal initiates the random access procedure by the transmitter transmitting a random access preamble corresponding to the received preamble index for the downlink timing candidate cell to the aggregation access point and maintains the configuration of the timing advance group until reception of re-configuration information for the timing advance group, in case the received preamble index for the random access procedure is not part of a subset of predefined preamble indices. Further, the processor of the mobile terminal re-configures the timing advance group by assigning the downlink timing candidate cell, for which the preamble index for the random access procedure was received, to become the new downlink timing reference cell of the timing advance group, in case the received preamble index for the random access procedure is part of the subset of predefined preamble indices.

According to an advantageous embodiment of the invention which can be used in addition or alternatively to the above, the receiver receives a random access response message from the aggregated access point including re-configuration information for a timing advance group in response to the transmission of the random access preamble.

According to an advantageous embodiment of the invention which can be used in addition or alternatively to the above, the signalling/control message including a preamble index for a random access procedure is a downlink control information (DCI) message.

According to an advantageous embodiment of the invention which can be used in addition or alternatively to the above, the signalling/control message including a preamble index for a random access procedure is a RRC connection configuration message.

According to an advantageous embodiment of the invention which can be used in addition or alternatively to the above, upon re-configuration of the timing advance group, the mobile terminal acknowledges reception of the signalling/control message including the preamble index for a random access procedure.

According to an advantageous embodiment of the invention which can be used in addition or alternatively to the above, in case the signalling/control message including a preamble index for a random access procedure is a RRC connection configuration message, the mobile terminal acknowledges reception of the signalling/control message including the preamble index for a random access procedure by the transmitter transmitting a RRC connection reconfiguration complete message.

According to an advantageous embodiment of the invention which can be used in addition or alternatively to the above, upon transmission of the random access preamble corresponding to the received preamble index for the newly assigned downlink timing reference cell to the aggregated access point, the receiver receives from the aggregated access point a random access response message including a timing advance command and an information for requesting or non-requesting the mobile terminal to:

re-configure the timing advance group by assigning the downlink timing candidate cell, for which the preamble index for the random access procedure was received, to become the new downlink timing reference cell of the timing advance group, and to

time-align the new downlink timing reference cell using the received timing advance command.

According to an advantageous embodiment of the invention which can be used in addition or alternatively to the above, upon reception of a random access response message including a timing advance command and a request information, the processor re-configures the timing advance group by assigning the downlink timing candidate cell, for which the preamble index for the random access procedure was received, to become the new downlink timing reference cell of the timing advance group. Further, the processor time-aligns the new downlink timing reference cell using the received timing advance command.

According to an advantageous embodiment of the invention which can be used in addition or alternatively to the above, upon reception of a random access response message including a timing advance command and a non-request information, the mobile terminal neither re-configures the timing advance group by assigning a new downlink timing reference cell nor time-aligns the downlink timing reference cell.

According to an advantageous embodiment of the invention which can be used in addition or alternatively to the above, a timer is provided in the mobile terminal, wherein, after elapse of a predetermined timeout after transmission of the random access preamble including the received preamble index for the downlink timing candidate cell to the aggregation access point, the processor maintains the downlink timing reference cell.

According to an advantageous embodiment of the invention which can be used in addition or alternatively to the above, the request / non-request information is included in the reserved-Bit of the random access response message.

According to an advantageous embodiment of the invention which can be used in addition or alternatively to the above, in case the reserved-Bit has a first value, the mobile terminal is requested to re-configure the timing advance group by assigning the new downlink timing reference cell and to time-align the new downlink timing reference cell. In case the reserved-Bit has a second value, the mobile terminal is not-requested to re-configure the timing advance group and neither assigns a new downlink timing reference cell nor time-aligns the new downlink timing reference cell.

According to an advantageous embodiment of the invention which can be used in addition or alternatively to the above, in case the receiver receives a signalling/control message for the downlink timing candidate cell that includes a preamble index for a random access procedure which is not equal to a subset of predefined preamble indices, and receives, in response to a transmission of the random access preamble, a random access response message from the aggregated access point including a timing advance command, a request information and a timing advance group assignment information, the processor re-configures another timing advance group by assigning the downlink timing candidate cell, for which the preamble index for the random access procedure was received, to become a member of the other timing advance group indicated by the timing advance group assignment information. Further, the processor does not time-align the downlink timing reference cell using the received timing advance command. Further, the processor does not re-configure the timing advance group by assigning a new downlink timing reference cell.

The present invention provides an aggregated access point for re-configuring a timing advance group of a mobile terminal in a mobile communication system. The mobile terminal is in communication with the aggregation access point and is configured with a timing advance group including a downlink timing reference cell and a downlink timing candidate cell. A transmitter of the aggregated access point transmits a signalling/control message for the downlink timing candidate cell to the mobile terminal, the signalling/control message including a preamble index for a random access procedure. A receiver of the aggregated access point receives a random access preamble. A processor of the aggregated access point triggers the mobile terminal to perform a random access procedure and to maintain the configuration of the timing advance group until reception of re-configuration information for the timing advance group, in case the received preamble index for the random access procedure is not part of a subset of predefined preamble indices. Further, the processor triggers the mobile terminal to re-configure the timing advance group by assigning the downlink timing candidate cell, for which the preamble index for the random access procedure was received, to become the new downlink timing reference cell of the timing advance group, in case the received preamble index for the random access procedure is part of the subset of predefined preamble indices.

According to an advantageous embodiment of the invention which can be used in addition or alternatively to the above, the transmitter transmits a random access response message to the mobile terminal including re-configuration information for a timing advance group in response to the reception of the random access preamble.

The present invention further provides a computer readable medium storing instructions that, when executed by a processor of a mobile terminal, cause the mobile terminal to re-configure a timing advance group in a mobile communication system, as follows. A signalling/control message for the downlink timing candidate cell is received, wherein the signalling/control message includes a preamble index for a random access procedure. In case the received preamble index for the random access procedure is not part of a subset of predefined preamble indices, the mobile terminal initiates the random access procedure by transmitting a random access preamble corresponding to the received preamble index for the downlink timing candidate cell to the aggregation access point and maintains the configuration of the timing advance group until the mobile terminal receives re-configuration information for the timing advance group. In case the received preamble index for the random access procedure is part of the subset of predefined preamble indices, the mobile terminal re-configures the timing advance group by assigning the downlink timing candidate cell, for which the preamble index for the random access procedure was received, to become the new downlink timing reference cell of the timing advance group.

## EP 2 640 138 A1

**BRIEF DESCRIPTION OF THE FIGURES**

In the following the invention is described in more detail in reference to the attached figures and drawings. Similar or corresponding details in the figures are marked with the same reference numerals.

| | |
|---|---|
| **Fig. 1** | shows an exemplary architecture of a 3GPP LTE system, |
| **Fig. 2** | shows an exemplary overview of the overall E-UTRAN architecture of 3GPP LTE, |
| **Fig. 3** | shows exemplary sub-frame boundaries on a downlink component carrier as defined for 3GPP LTE (Release 8/9), |
| **Fig. 4** | shows an exemplary downlink resource grid of a downlink slot as defined for 3GPP LTE (Release 8/9), |
| **Figs. 5 & 6** | show the 3GPP LTE-A (Release 10) Layer 2 structure with activated carrier aggregation for the downlink and uplink, respectively, |
| **Fig. 7** | shows a RACH procedure as defined for 3GPP LTE (Release 8/9) in which contentions may occur, |
| **Fig. 8** | shows a contention-free RACH procedure as defined for 3GPP LTE (Release 8/9), |
| **Fig. 9** | exemplifies the time alignment of an uplink component carrier relative to a downlink component carrier by means of a timing advance as defined for 3GPP LTE (Release 8/9), |
| **Fig. 10** | shows an exemplary scenario in which a user equipment aggregates two cells, one cell originating from an eNodeB, and the other cell originating from a Remote Radio Head (RRH), |
| **Fig. 11** | shows an exemplary scenario in which a user equipment aggregates two cells, one cell originating from an eNodeB, and the radio cell originating from a Frequency Selective Repeater (FSR), |
| **Fig. 12** | shows the format of an activation/deactivation MAC control element, being a command for activating or deactivating one or more SCells, |
| **Fig. 13** | shows the format of an MAC PDU subheader, which consists of three header fields E/T/RAPID, |
| **Fig. 14** | shows the format of an MAC PDU subheader, which consists of five header fields E/T/R/R/BI as Backoff Indicator, |
| **Fig. 15** | shows the format of an MAC random access response (RAR), which consists of four fields R/Timing Advance Command/UL Grant/Temporary C-RNTI, |
| **Fig. 16** | exemplifies details of a RACH response MAC PDU, which includes at least one of the MAC PDU headers according to Figs. 13 or 14, at least one MAC random access response according to Fig. 15 and optional padding bits, |
| **Fig. 17** | illustrates the disadvantage of using a random access procedure on a cell which is to be configured as downlink timing reference cell, and in particular, the messages necessary for assigning Cell B to become the downlink timing reference cell of the timing advance group (TAG), |
| **Fig. 18** | illustrates the disadvantage of using a random access procedure when the timing advance (TA) determined for a newly assigned downlink timing reference cell exceeds the timing advance (TA) of the previous downlink timing reference cell, |
| **Fig. 19** | is a signaling diagram illustrating an exemplary reconfiguration of a timing advance group of a mobile terminal according to one embodiment of the invention, |
| **Fig. 20** | shows a signaling diagram illustrating an exemplary abandoned reconfiguration of a timing advance group of a mobile terminal according to another embodiment of the invention, |

**Fig. 21**    illustrates a signaling diagram performing the reconfiguration of a timing advance group of a mobile terminal according to another embodiment of the invention,

**Fig. 22**    shows a signaling diagram illustrating an exemplary abandoned reconfiguration of a timing advance group of a mobile terminal and later a reconfiguration of the timing advance group of the mobile terminal according to one of the preceding embodiments of the invention,

**Fig. 23**    is a signaling diagram illustrating an exemplary reconfiguration of a timing advance group of a mobile terminal according to a further embodiment of the invention,

## DETAILED DESCRIPTION OF THE INVENTION

The following paragraphs will describe various embodiments of the invention. For exemplary purposes only, most of the embodiments are outlined in relation to an orthogonal single-carrier uplink radio access scheme according to 3GPP LTE (Release 8/9) and LTE-A (Release 11) mobile communication systems, partly discussed in the Technical Background section above. It should be noted that the invention may be advantageously used for example in a mobile communication system such as 3GPP LTE-A (Release 11) communication systems as described in the Technical Background section above, but the invention is not limited to its use in this particular exemplary communication networks. The invention may be broadly used in communication systems where time alignment of uplink transmissions on multiple cells (having different propagation delays) is desired.

In the context of the invention, the term **"timing advance group"** or **"TA group"** refers to a network configuration where a plurality of cells, on which an UE is performing uplink transmissions, are aggregated in a timing advance group (i.e. the cells are configured to be members of the timing advance group). For each group, the UE is configured with only one timing advance. In other words, the UE is performing uplink transmission on all cells aggregated in the group with a single timing advance value. This uplink timing advance is applied by the UE for uplink transmissions on the various cells of the timing advance group with respect to the downlink reception timing of a single downlink timing reference cell.

Accordingly, all uplink transmissions on the various cells of the "timing advance group" are transmitted by the UE at the same time (namely with a timing advance for the downlink timing reference cell) .

In this respect, the term **"reference cell" or "downlink timing reference cell"** refers to that cell (PCell or one of the SCells) of a timing advance group for which the downlink reception timing serves as the reference for the timing alignment group and to which the timing advance for uplink transmissions from cells within this timing alignment group is applied to.

Advantageously, the downlink timing reference cell in a PCell Timing advance group (pTAG) may be the PCell since the downlink of the PCell is always activated and also determines the radio link failure behaviour for the mobile terminal. Further, in a SCell Timing advance group (sTAG) , a cell may be a SCell for which a RACH procedure is being performed. Nevertheless, it may also be any of the activated and time- aligned SCells in the pTAG or sTAG, previously being time- aligned according to the present invention.

The term **"aggregation access point"** is used to denote the location in the access network, i.e. a node, at which the uplink transmissions of the user equipment on the different uplink component carriers are aggregated (e.g. eNode or base station). Aggregation as such refers to

- a simultaneous reception of the radio signals corresponding to transmissions (e.g. respective sub-frames) on the different uplink component carriers from the user equipment, i.e. on the physical layer, for joint physical layer processing (e.g. joint demodulation (e.g. including utilization of one IFFT (Inverse Fast Fourier Transform) for the processing of the received sub-frame in an OFDM system) and/or joint decoding of coded transport block(s), etc.) by the aggregation access point;
  and/or
- a processing of protocol data units received in the transmissions (e.g. respective sub-frames) on the different uplink component carriers from the mobile terminal in a protocol entity of the aggregation access point.

The conjoint processing of protocol data units received in the transmissions on the different uplink component carriers from the user equipment may be - in one exemplary implementation - the conjoint processing of PDUs obtained from the transmissions on the different uplink component carriers in the MAC layer or RLC layer of the aggregation access point, e.g. for the purpose of PDU reordering.

The term **"candidate cell"** or **"downlink timing candidate cell"** refers to a cell, which uplink transmissions are time-aligned and which is thus a candidate for the reconfiguration of a timing advance group of the invention. In accordance with the above definition of the "downlink timing reference cell", the "downlink timing candidate cell" would be most of the times one of the SCells that has not lost its uplink time alignment and does not experience bad radio conditions (which can exemplary determined based on its DL radio quality RSRP/RSRQ/ RSSI /CQI or any other quality parameter).

The explanations given in the Technical Background section above are intended to better understand the mostly 3GPP LTE (Release 8/9) and LTE-A (Release 10) technical fields. They should not be understood as limiting the invention to the described specific implementations of processes and functions in the mobile communication network. The specific exemplary embodiments described in the following may be implemented in LTE Release 11, which discussion started recently.

As long as uplink and downlink transmissions of an UE via the downlink timing reference cell are performed under good radio condition (from a given UE's perspective) a downlink reference cell can be advantageously used for time alignment of uplink transmissions via the various cells aggregated in the timing advance group.

However, if the radio communication condition for the downlink timing reference cell deteriorate (e.g. determined based on DL radio quality RSRP/ RSRQ/ RSSI/ CQI or any other quality parameter) an eNodeB configuring the UE may decide to remove (or deactivate) the downlink timing reference cell.

In this respect, the eNodeB may decide to reconfigure the timing advance group by changing the downlink timing reference cell for the UE. Thereby, the eNodeB may ensure good uplink transmission timings for the other cells of the timing advance group. Specifically, the eNodeB may re-configure the timing advance group so that the UE is provided with a downlink timing reference cell allowing for a good timing alignment of all uplink transmissions on the various cells of the timing advance group.

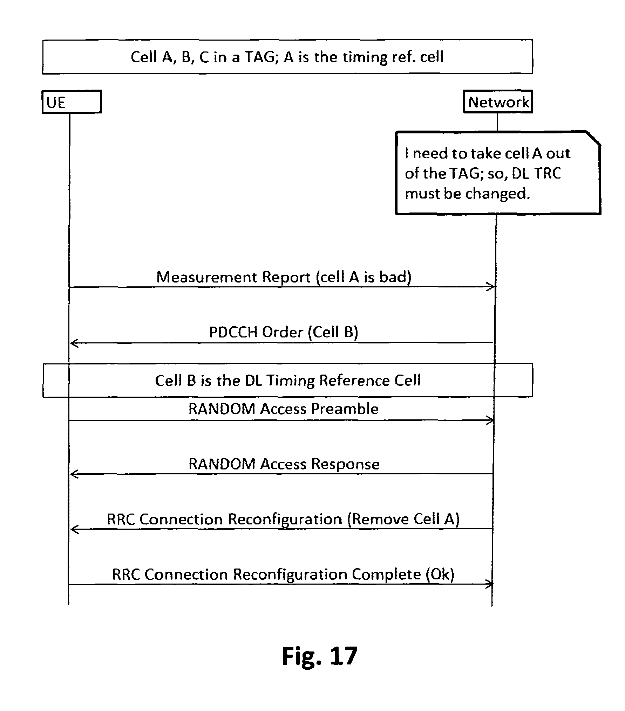

As can be seen from Fig. 17 and as explained in the technical background section, a time alignment of a cell, and thereby a reconfiguration of a timing advance group, may be achieved by a contention-free RACH procedure.

The contention-free RACH procedure includes three steps: first an eNodeB transmits a Random access preamble assignment message also indicated "PDCCH order" for a candidate cell. The candidate cell thereupon becomes for timing advance group of the UE the new downlink timing reference cell. Then, the UE responds by transmitting a random access preamble corresponding to the preamble assignment message. Finally, the UE is provided with a random access response including a timing advance command upon which the UE assigns the candidate cell to become the new reference cell and time aligns the candidate cell using the timing advance command provided with the random access response. Thereby, a timing advance groups is re-configured.

Further, in case the eNodeB decides to reconfigure the UE by removing/ deactivating the previous downlink timing reference cell, the eNodeB may transmit an additional RRC connection reconfiguration message for removal/ deactivation of the previous downlink timing reference cell. In response to this RRC connection reconfiguration message, the UE transmits a RRC connection reconfiguration complete message to the eNodeB.

In more detail, when an UE receives a DCI format 1A message including 144 information bits on the PDCCH scrambled with the UE's C-RNTI and the information bits set as defined in Table 1 below, the UE is ordered by eNodeB to initiate a random access procedure on the cell the PDCCH was received for.

In the absence of a carrier indicator, the UE initiates the random access procedure on the cell the PDCCH was received on, otherwise the carrier indicator determines on which the random access procedure is initiated.

**Table 1 - Bit setting for PDCCH with DCI format 1 A ordering RACH procedure**

| Description | Number of bits | Setting |
|---|---|---|
| Carrier indicator | 0-3 | |
| Flag for format0/format1A | 1 | 1 |
| Localized/Distributed VRB assignment flag | 1 | 0 |
| Resource block assignment | $\left\lceil \log_2(N_{RB}^{DL}(N_{RB}^{DL}+1)/2) \right\rceil$ | All set to 1 |
| Preamble Index | 6 | 000000 for contention based RACH Remaining 63 values for preamble selection |
| PRACH Mask Index | 4 | |
| All remaining bits | | 0 |

Additionally, the cell for which the PDCCH order was received for becomes the downlink timing reference cell of the SCell timing advance group (sTAG) in which the cell is located. Accordingly, the subsequent uplink transmissions of all uplinks on the SCells within the sTAG are based on this cells downlink timing with the current timing advance applied.

Specifically, the DCI format 1A message, as indicated above, includes a filed for a preamble index. Each one of the 63 possible, non- zero preamble indices may be selected by the eNodeB and in order to determine a corresponding RACH preamble which is sent by the UE to the eNodeB. Since a RACH preamble can thereby be pre- allocated to each UE a contention case (i.e. two UEs using the same preamble for RACH procedure) may be prevented from happening. In other words, by the eNodeB selecting preamble indices for the UEs to perform RACH procedures, the UEs may perform contention- free RACH procedures and no contention resolution is needed.

A special case is where the eNodeB transmits a DCI format 1A message with a preamble index that is set to all 0 (i.e. "000000"). Then each UE may perform a contention based RACH procedure, namely each UE may select a preamble to be used for the RACH procedure as described in the technical background section. For an ordered RACH procedure on a SCell, contention based RACH procedures are not allowed. Accordingly, the preamble index with the value "000000" in DCI format 1A, when included on a PRACH for a SCell, is currently not defined.

One object of the invention is the re-configuration of a timing advance group by assigning a downlink timing candidate cell to become the downlink timing reference cell without reverting to the contention-free RACH procedure.

To achieve this, the invention defines a subset of predefined preamble indices for a random access procedure, wherein an UE, upon reception of a signaling/control message including one predefined preamble index that is part of the subset, reconfigures the timing advance group by assigning the downlink timing candidate cell, for which the preamble index was received, to become the new downlink timing reference cell of the timing advance group. Another object of the invention is to provide for a test of the propagation delay for different cell than the downlink timing reference cell by the eNodeB without immediate reconfiguration of the timing advance group, namely without assigning the tested cell to become the new downlink timing reference cell of the timing advance group.

To achieve this, the invention defines another subset of predefined preamble indices for a random access procedure, wherein an UE, upon reception of a signaling/control message including one predefined preamble index that is part of the other subset, the mobile terminal initiates the random access procedure by transmitting a random access preamble corresponding to the received preamble index for the downlink timing candidate cell to the aggregation access point and maintains the configuration of the timing advance group.

In more detail, the mobile terminal maintains the downlink timing reference cell until the mobile terminal receives, in response to the transmission of the random access preamble, a random access response message from the aggregated access point including re-configuration of the timing advance group.

In the invention, the subset of predefined preamble of the first aspect and the other subset of the second aspect are complementary.

The following specific scenario is assumed, however should not be understood as limiting the invention, but as an example for describing the invention's principles.

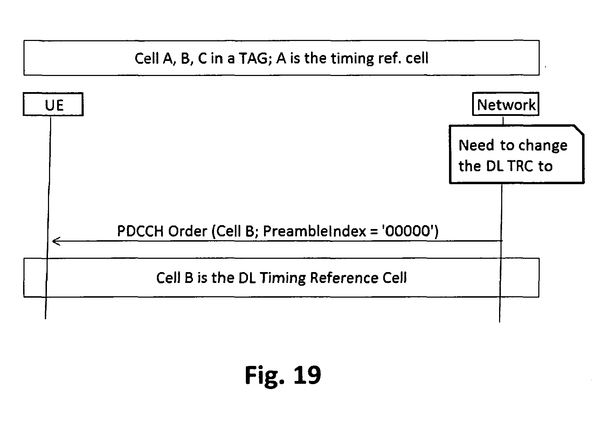

Referring now to Fig. 19, a specific example of a reconfiguration of a timing advance group according to the invention is shown.

In this particular example, the UE is configured with three cells, namely cell A, cell B and cell C. All three cells are aggregated in the same timing advance group. For this timing advance group, the UE is configured with cell A as the downlink timing reference cell. Accordingly, all uplink transmissions by the UE on the three cells of the timing advance group are time aligned with respect to the downlink reception timing of cell A.

For one of the reasons mention above, the network, or eNodeB may decide that UE cannot keep cell A as downlink timing reference cell. In this particular case, the eNodeB decides that the timing advance group of the UE has to be reconfigured, namely that cell B is to become the new downlink timing reference cell. For this purpose, the eNodeB transmits a PDCCH order including an all-zero preamble index for cell B to the UE. Specifically, the PDCCH order is transmitted using a DCI format 1A which, as a preamble index field, has the bit pattern "000000".

When the UE receives the PDCCH order including an all-zero preamble index for the UE re-configures the timing advance group by assigning cell B, for which the preamble index was received in the PDCCH order, to become the new downlink timing reference cell of the timing advance group.

Assuming a specific example, where the three cells, namely cell A, cell B and cell C are all SCells and the timing advance group is a sTAG, the preamble index with the value "000000" in DCI format 1 A, when included on a PRACH for a SCell, is conventionally not defined.

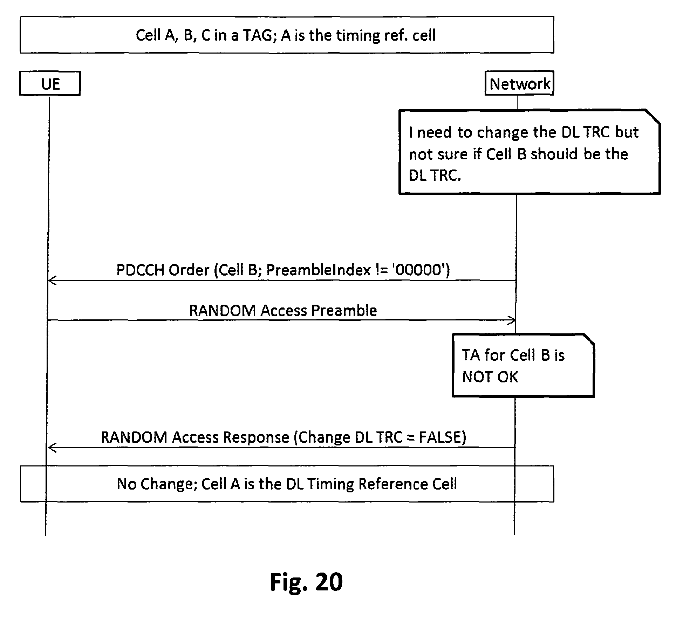

Referring now to Fig. 20, another specific example of the reconfiguration of a timing advance group according to the invention is shown.

In this particular example, the UE is also configured with three cells, namely cell A, cell B and cell C. All three cells are aggregated in the same timing advance group. For this timing advance group, the UE is configured with cell A as the downlink timing reference cell. Accordingly, all uplink transmissions by the UE on the three cells of the timing advance group are time aligned with respect to the downlink reception timing of cell A.

For one of the reasons mentioned above, the network or eNodeB may decide that cell A as the downlink timing reference cell is not optimal for time alignment of all cells of the timing advance group. In this case, the eNodeB may decide that cell B is a candidate cell for becoming a new downlink timing reference cell.

According to the invention, the eNodeB is provided with means to determine the propagation delay via the candidate cell B, before the eNodeB actually triggers a reconfiguration of the timing advance group for the UE. For this purpose, the eNodeB transmits a PDCCH order including a not all-zero preamble index for the cell B to the UE. Specifically, the PDCCH order is transmitted using a DCI format 1A which, as a preamble index filed, has the bit pattern not equal to "000000", for instance "000001", "000010" or "000011".

When the UE receives the PDCCH order including a preamble index which is not all-zero, the UE transmits in response thereto a corresponding random access preamble on cell B to the eNodeB. In this respect, the eNodeB is provided with means to derive a timing advance for the respective cell B. Based on the timing advance for cell B, the eNodeB can determine whether or not to request change of the downlink timing reference cell for the timing advance group of the UE.

In more detail, when the UE receives via a PDCCH order a preamble index which is not all-zero, the UE initiates the random access procedure by transmitting a random access preamble corresponding to the received preamble index for cell B and maintains the configuration of the timing advance group until the UE receives a random access response message from the eNodeB including re-configuration information of the timing advance group.

In the this specific example illustrated in Fig. 20, the eNodeB decides that the timing advance for cell B determined from the random access preamble received by the eNodeB is not ok (i.e. is for example larger than a predetermined threshold), the eNode may decide not to reconfigure the timing advance group by assigning cell B to become the new downlink timing reference cell and to maintain the current configuration of the timing advance group.

However, if the eNodeB decides that the timing advance for the cell B is ok, the re- configuration of the timing advance group may be achieved by the UE receiving a random access response message including re- configuration information for a timing advance group. However, in another example, the re- configuration of the timing advance group may be achieved by receiving a PDCCH order including an all- zero preamble index as explained with respect to Fig. 19. Needless to say that the random access response message includes a timing advance command for a cell of the timing advance group which shall be used by the UE for timing alignment of the cell B and is received by the UE in response to the transmission of the random access preamble on the cell B.

Consequently, after probing the timing of a cell, i.e. eNodeB has received the RACH preamble and measured the roundtrip time, eNodeB includes it's decision for this cell in the Random Access Response (RAR) .

Further, in case the timing advance for cell B determined from the random access preamble received by the eNodeB is not ok (i.e. is for example larger than a predetermined threshold) , the eNode may decide not to reconfigure the timing advance group by assigning cell B to become the new downlink timing reference cell and to maintain the current configuration of the timing advance group.

For this purpose, the eNodeB transmits a random access response to the UE which includes, further to a timing advance command, a non-request or request information. The non-request information, for example, in the random access response is an information for non-requesting a change of the downlink timing reference cell and additionally, for ignoring the timing advance command of the random access response message.

The random access response message is transmitted in response to the random access preamble transmitted by the UE to the eNodeB. In other words, in response to the transmission of the random access preamble, the UE may receive a random access response message from the eNodeB including re-configuration information for the timing advance group.

Consequently, the UE maintains the configuration of the timing advance group until the mobile terminal receives new reconfiguration information for the timing advance group. This re- configuration information for the timing advance group may be transmitted by the eNodeB to the UE in form of a random access response message) . .

Accordingly, for the above case when the preamble index is set to any other value but "000000" the UE shall proceed with a RACH procedure on that cell but shall not change the DL timing reference to this cell.

In a more specific realization of the invention, the non-request information in the reserved-bit of the random access response message as indicated "R" bit in Fig. 15. Specifically, if the R bit in the random access response (RAR) message is set to one the UE will change the downlink timing reference to the cell where it just performed RACH procedure on and also apply the timing advance command received in the random access response. If the R bit is set to zero the UE will ignore the timing advance command in the RAR and not change the downlink timing reference cell.

Further, the UE may acknowledge the reception of this PDCCH order on the appropriate resources on the PUCCH, in case the preamble index set in the PDCCH order is "000000". Specifically, since the PDCCH order with preamble index set to 000000 now triggers the DL timing reference cell change without any further related uplink signaling (i.e. the RACH preamble transmission in the UL is not related to this procedure anymore) , it is advantageous if the UE acknowledges the reception of this PDCCH on the appropriate resources on the PUCCH. This may enhance the reliability of this signaling procedure.

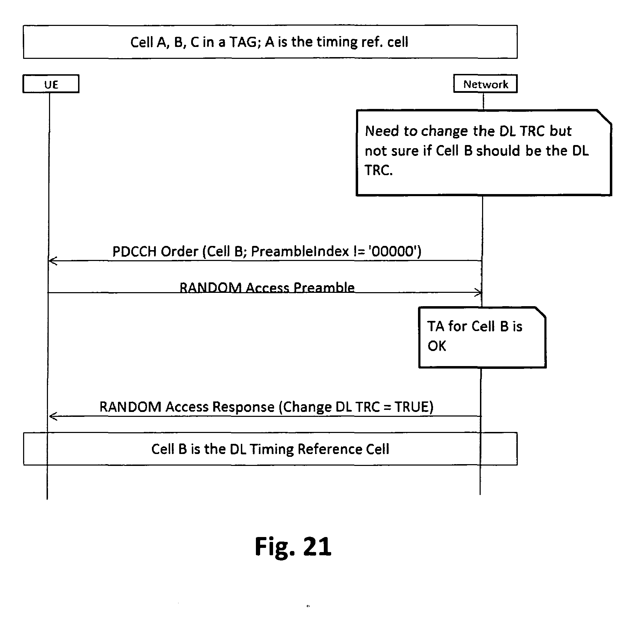

Referring now to Fig. 21, a further specific example of the reconfiguration of a timing advance group according

EP 2 640 138 A1

to the invention is shown.

This particular example is similar to that of Fig. 20 and also the UE is configured with three cells, namely cell A, cell B and cell C. All three cells are aggregated in a timing advance group. For this timing advance group, the UE is configured with cell A as the downlink timing reference cell. Accordingly, all uplink transmissions by the UE on the three cells of the timing advance group are time aligned with respect to the downlink reception timing of cell A.

For one of the reasons mentioned above, the network or eNodeB may decide that cell A as the downlink timing reference cell is not optimal for time alignment of all cells of the timing advance group. In this case, the eNodeB may decide that cell B is a candidate cell for becoming a new downlink timing reference cell.

According to the invention, the eNodeB is provided with means to determine the propagation delay via the candidate cell B, before the eNodeB actually triggers a reconfiguration of the timing advance group for the UE. For this purpose, the eNodeB transmits a PDCCH order including a not all-zero preamble index for the cell B to the UE. Specifically, the PDCCH order is transmitted using a DCI format 1A which, as a preamble index filed, has the bit pattern not equal to "000000", for instance "000001", "000010" or "000011".

When the UE receives the PDCCH order including a preamble index which is not all-zero, the UE transmits in response thereto a corresponding random access preamble on cell B to the eNodeB. In this respect, the eNodeB is provided with means to derive a timing advance for the respective cell B. Based on the timing advance for cell B, the eNodeB can determine whether or not to request change of the downlink timing reference cell for the timing advance group of the UE.

In the specific example illustrated in Fig. 21, the eNodeB decides that the timing advance for the cell B is ok and then the eNodeB transmits re-configuration information to the UE.

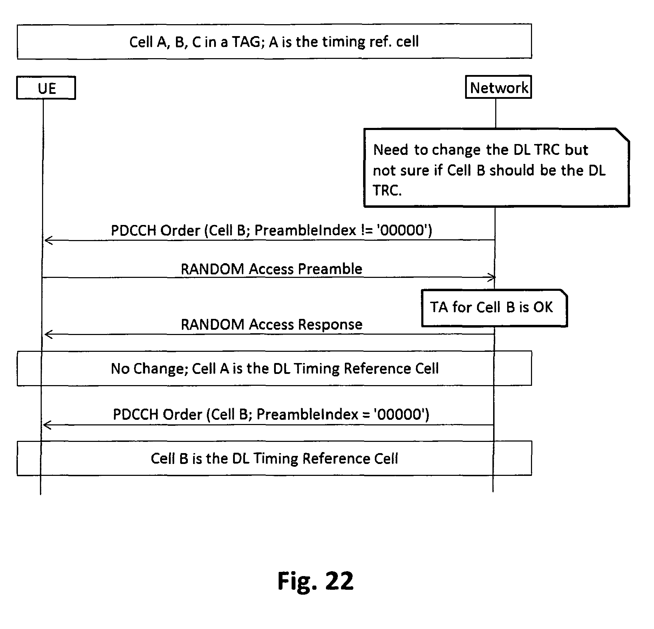

The re-configuration of the timing advance group may be achieved by the UE receiving a random access response message including re-configuring information for a timing advance group. However, in another example, the re-configuration of the timing advance group may be achieved by receiving a PDCCH order including an all-zero preamble index as illustrated with respect to Fig. 22.

Needless to say that the random access response message include a timing advance command that is based on the evaluation of the random access preamble sent by cell B, which can be used by the UE for timing alignment of the cell B and is received by the UE in response to the transmission of the random access preamble on the cell B.

In more detail, when the UE receives via a PDCCH order a preamble index which is not all-zero, the UE initiates the random access procedure by transmitting a random access preamble corresponding to the received preamble index for cell B and maintains the configuration of the timing advance group until the UE receives a random access response message from the eNodeB including re-configuration information of the timing advance group.

Consequently, after probing the timing of a cell, i.e. eNodeB has received the RACH preamble and measured the roundtrip time, eNodeB includes it's decision for this cell in the Random Access Response (RAR) . In order to indicate eNodeB's decision the R bit in the prior art RAR is used.

For this purpose, the eNodeB transmits a random access response to the UE which includes, further to a timing advance command, a request information. The request information in the random access response is an information for requesting a reconfiguration of the timing advance group. In particular, the UE receiving a random access response including request information assigns cell B, for which the preamble index for the random access procedure was received, to become the new downlink timing reference cell of the timing advance group. Additionally, the UE time-aligns time-align cell B using the received timing advance command of the random access response message.

The random access response message is transmitted by the eNodeB in response to the random access preamble to the UE. In other words, in response to the transmission of the random access preamble, the UE may receive a random access response message from the eNodeB including re-configuration information for the timing advance group.

In a specific realization of the invention, the non-request information in the reserved-bit of the random access response message as indicated "R" bit in Fig. 15. Specifically, if the R bit in the random access response (RAR) message is set to one the UE will change the downlink timing reference to the cell where it just performed RACH procedure on and also apply the timing advance command received in the random access response. If the R bit is set to zero the UE will ignore the timing advance command in the RAR and not change the downlink timing reference cell.

In one variation of the above system, a random access response message for an SCell may include a new timing advance group (TAG) for the SCell. For this purpose, the random access response message includes a timing advance group assignment information in addition to the R bit (i.e. that indicates application of timing advance command and downlink timing reference cell change). Specifically, in random access response two octets for Temporary C-RNTI and can be redefined to indicate the appropriate TAG identity.

Accordingly, means are provided to change the downlink timing reference cell when the network sends signaling information to add a new cell to the UE's Timing advance group (TAG) , or any other end (e.g. when configuring measurements in the UE) similarly as described above.

Exemplary, the R Bit in a random access response message may be used by the UE to interpret the timing advance group assignment information and Timing advance command of the random access response. Specifically, by

23

way of R bit, the eNodeB may indicate that the timing advance command is not to be applied by the UE, no downlink timing reference cell change is to be performed by the UE, but the cell for which the RAR is received, is to be assigned to the indicated timing advance group. Needless to say, that with an assignment of a cell to a new timing advance group, its previous timing advance group is updated by removing the cell therefrom.

Another variation of the signaling of TA command application and DL timing reference cell change in the RAR is that eNodeB omits the RAR when no change of DL timing reference cell shall be done. Only when DL timing reference cell shall be changed a RAR is send. This variation implies that UE waits for RAR within the RAR window but does not retransmit the PRACH preamble as it would do in the prior art. This variation does then not require the usage of the R bit in the RAR as described above.

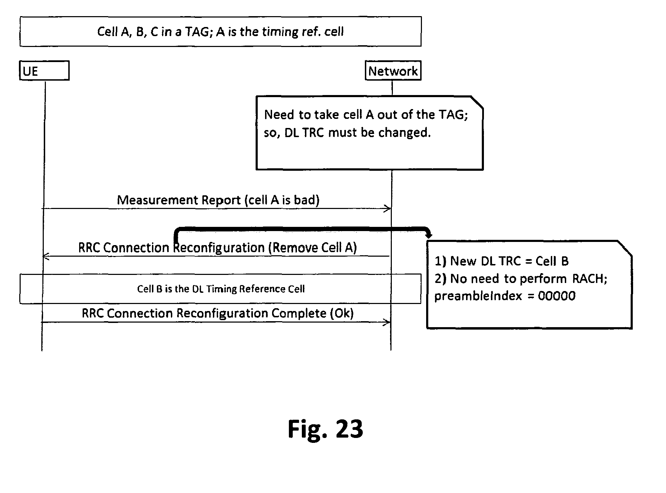

Referring now to Fig. 23, an alternative embodiment is shown providing an alternative solution for the reconfiguration of timing advance groups.

Upon the reception of RRC signaling message for downlink timing reference cell change, the UE would straightaway change the downlink timing reference cell to the new indicated cell irrespective of whether or not a valid preamble index is signaled. This is done in the RRC Connection Reconfiguration message.

In summary, the invention provides for means to decouple the change of the downlink timing reference cell from the RACH order the following new rules are applied to the reception of a PDCCH ordering a RACH procedure on a SCell.

Specifically, the invention allows for a change the downlink timing reference cell to the newly indicated downlink timing reference cell only if the indicated preamble is part of a subset of value (like "000000") else it may need to perform the RACH Procedure first (when the preamble has some valid value that is not equal to any of the special values) . The network shall indicate an actual change of DL Timing Reference Cell to the new cell in the RAR (Random Access Response message) .

Further, the invention enables probing of one cell within a sTAG whether it's timing is suited for this cell and finds it unsuitable it needs to go through the procedure. Namely, it can be avoided falsely changing to cell B after probing that cell and then changing back to a suited (e.g. previous) cell.

Further, this invention provides a mean to optimize the signaling and avoid un- necessary RACH. The invention adds signaling information (to the existing RRC signaling that removes (or adds another cell in different embodiment) the current DL Timing Reference Cell) that is necessary to:

- Indicate the downlink timing reference cell e.g. the cell index of new downlink timing reference cell, and

- preamble, optionally.

Accordingly, the UE shall change the DL Timing Reference Cell to the new indicated DL Timing Reference Cell only if the indicated preamble is some special value (like 00000) else it may need to perform the RACH Procedure first (when the preamble has some valid value that is not equal to any of the special values) . The network shall indicate an actual change of DL Timing Reference Cell to the new cell in the RAR (Random Access Response message) .

*Hardware and Software Implementation of the Invention*

It is further recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD- ROM, DVD, etc.

It should be further noted that the individual features of the different embodiments of the invention may individually or in arbitrary combination be subject matter to another invention.

It would be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

**Claims**

1. A method for re-configuration of a timing advance group by a mobile terminal in a mobile communication system, the mobile terminal being in communication with an aggregation access point and being configured with a timing advance group including a downlink timing reference cell and a downlink timing candidate cell, the method comprising the steps of:

   receiving by the mobile terminal a signalling/control message for the downlink timing candidate cell, the signalling/control message including a preamble index for a random access procedure, and

   wherein, in case the received preamble index for the random access procedure is not part of a subset of predefined preamble indices, the mobile terminal initiates the random access procedure by transmitting a random access preamble corresponding to the received preamble index for the downlink timing candidate cell to the aggregation access point and maintains the configuration of the timing advance group until the mobile terminal receives re-configuration information for the timing advance group, and

   wherein, in case the received preamble index for the random access procedure is part of the subset of predefined preamble indices, the mobile terminal re-configures the timing advance group by assigning the downlink timing candidate cell, for which the preamble index for the random access procedure was received, to become the new downlink timing reference cell of the timing advance group.

2. The method according to claim 1, wherein the mobile terminal receives the re-configuration information for the timing advance group as a random access response message from the aggregated access point including reconfiguration information in response to the transmission of the random access preamble.

3. The method according to claim 1 or 2, wherein the signalling/control message including a preamble index for a random access procedure is a downlink control information (DCI) message or a RRC connection configuration message.

4. The method according to a preceding claim, wherein upon re-configuration of the timing advance group by the mobile terminal, the mobile terminal acknowledges reception of the signalling/control message including the preamble index for a random access procedure.

5. The method according to claim 4, wherein, in case the signalling/control message including a preamble index for a random access procedure is a RRC connection configuration message, the mobile terminal acknowledges reception of the signalling/control message including the preamble index for a random access procedure by transmitting a RRC connection reconfiguration complete message.

6. The method according to a preceding claim, wherein upon transmission of the random access preamble corresponding to the received preamble index for the newly assigned downlink timing reference cell by the mobile terminal to the aggregation access point, the aggregation access point transmits a random access response message including a timing advance command and an information for requesting or non-requesting the mobile terminal to:

   - re-configure the timing advance group by assigning the downlink timing candidate cell, for which the preamble index for the random access procedure was received, to become the new downlink timing reference cell of the timing advance group, and to
   - time-align the new downlink timing reference cell using the received timing advance command.

7. The method according to claim 6, wherein upon reception by the mobile terminal of a random access response message including a timing advance command and a request information, the mobile terminal:

   - re-configures the timing advance group by assigning the downlink timing candidate cell, for which the preamble index for the random access procedure was received, to become the new downlink timing reference cell of the timing advance group, and
   - time-aligns the new downlink timing reference cell using the received timing advance command.

8. The method according to claim 6, wherein upon reception by the mobile terminal of a random access response message including a timing advance command and a non-request information, the mobile terminal neither re-configures the timing advance group by assigning a new downlink timing reference cell nor time-aligns the downlink timing reference cell.

9. The method according to claim 6, wherein, after elapse of a predetermined timeout after transmission of the random access preamble including the received preamble index for the downlink timing candidate cell to the aggregation access point, the mobile terminal maintains the downlink timing reference cell.

10. The method according to claim 6 to 8, wherein the request / non-request information is included in the reserved-Bit of the random access response message.

11. The method according to claim 10, wherein, in case the reserved-Bit has a first value, the mobile terminal is requested to re-configure the timing advance group by assigning the new downlink timing reference cell and to time-align the new downlink timing reference cell and, in case the reserved-Bit has a second value, the mobile terminal is not-requested to re-configure the timing advance group and neither assigns a new downlink timing reference cell nor time-aligns the new downlink timing reference cell.

12. The method according to a preceding claim, wherein:

in case the mobile terminal receives a signalling/control message for the downlink timing candidate cell, wherein the signalling/control message includes a preamble index for a random access procedure which is not equal to a subset of predefined preamble indices,
the mobile terminal in response to a transmission of the random access preamble receives a random access response message from the aggregated access point including a timing advance command, a request information and a timing advance group assignment information,

- re-configures another timing advance group by assigning the downlink timing candidate cell, for which the preamble index for the random access procedure was received, to become a member of the other timing advance group indicated by the timing advance group assignment information, and
- does not time-align the downlink timing reference cell using the received timing advance command, and
- does not re-configure the timing advance group by assigning a new downlink timing reference cell.

13. A mobile terminal for re-configuring a timing advance group in a mobile communication system, the mobile terminal being in communication with an aggregation access point and being configured with a timing advance group including a downlink timing reference cell and a downlink timing candidate cell, the mobile terminal comprising:

a receiver adapted to receive a signalling/control message for the downlink timing candidate cell, the signalling/control message including a preamble index for a random access procedure,
a transmitter adapted to transmit a random access preamble, ,
a processor adapted to initiate the random access procedure by the transmitter transmitting a random access preamble corresponding to the received preamble index for the downlink timing candidate cell to the aggregation access point and to maintain the configuration of the timing advance group until reception of re-configuration information for the timing advance group, in case the received preamble index for the random access procedure is not part of a subset of predefined preamble indices, and
the processor is further adapted to re-configure the timing advance group by assigning the downlink timing candidate cell, for which the preamble index for the random access procedure was received, to become the new downlink timing reference cell of the timing advance group, in case the received preamble index for the random access procedure is part of the subset of predefined preamble indices.

14. The mobile terminal according to claim 12, wherein the receiver is adapted to receive a random access response message from the aggregated access point including re-configuration information for a timing advance group in response to the transmission of the random access preamble.

15. An aggregated access point for re-configuring a timing advance group of a mobile terminal in a mobile communication system, the mobile terminal being in communication with an aggregation access point and being configured with a timing advance group including a downlink timing reference cell and a downlink timing candidate cell, the aggregated access point comprising:

a transmitter adapted to transmit a signalling/control message for the downlink timing candidate cell to the mobile terminal, the signalling/control message including a preamble index for a random access procedure,
a receiver adapted to receive a random access preamble, and
a processor adapted to trigger the mobile terminal to perform a random access procedure and to maintain the configuration of the timing advance group until reception of re-configuration information for the timing advance group, in case the received preamble index for the random access procedure is not part of a subset of predefined preamble indices, and

the processor is further adapted to trigger the mobile terminal to re-configure the timing advance group by assigning the downlink timing candidate cell, for which the preamble index for the random access procedure was received, to become the new downlink timing reference cell of the timing advance group, in case the received preamble index for the random access procedure is part of the subset of predefined preamble indices.

Fig. 1

MME / Serving GW     MME / Serving GW

······· S1 interface

— — X2 interface

eNB

eNB

eNB

E-UTRAN

**Fig. 2**

**Fig. 3**

One downlink slot $T_{\text{slot}}$

$N_{\text{symb}}^{\text{DL}}$ OFDM symbols

$k = N_{\text{RB}}^{\text{DL}} N_{\text{sc}}^{\text{RB}} - 1$

subcarriers

subcarriers

Resource block
$N_{\text{symb}}^{\text{DL}} \times N_{\text{sc}}^{\text{RB}}$ resource elements

Resource element $(k, l)$

$k = 0$

$l = 0$     $l = N_{\text{symb}}^{\text{DL}} - 1$

## Fig. 4

EP 2 640 138 A1

**Radio Bearers**

*PDCP*

| ROHC | ... | ROHC | | ROHC | ... | ROHC |

| Security | ... | Security | | Security | ... | Security |

*RLC*

| Segm. ARQ etc | ... | Segm. ARQ etc | | Segm. ARQ etc | ... | Segm. ARQ etc |   CCCH  BCCH  PCCH    Segm.   Segm.

MCCH    MTCH

**Logical Channels**

| Unicast Scheduling / Priority Handling | | MBMS Scheduling |

*MAC*

| Multiplexing UE$_I$ | ... | Multiplexing UE$_n$ | | Multiplexing |

| HARQ | ... | HARQ | | HARQ | ... | HARQ |

**Transport Channels**

DL-SCH on CC$_I$    DL-SCH on CC$_x$    DL-SCH on CC$_I$    DL-SCH on CC$_y$    BCH   PCH    MCH

**Fig. 5**

*Radio Bearers*

*PDCP*

ROHC | ROHC

Security | Security

*RLC*

Segm. ARQ etc | ... | Segm. ARQ etc

*CCCH*

*Logical Channels*

Scheduling / Priority Handling

Multiplexing

*MAC*

HARQ | ... | HARQ

*Transport Channels*

UL-SCH on $CC_l$ | UL-SCH on $CC_z$

## Fig. 6

UE                                                                    eNodeB

Random Access Preamble 701

Random Access Response 702

Scheduled Transmission 703

Contention Resolution 704

**Fig. 7**

UE                                                                    eNodeB

Random access Preamble Assignement 801

Random Access Preamble 802

Random Access Response 803

**Fig. 8**

eNodeB

sub-frame

DL transmission by eNodeB to UE

| 1 | 2 | 3 |

DL reception by UE from eNodeB

$PD_{eNB-UE}$

| 1 | 2 | 3 |

$TA=2 \cdot PD_{eNB-UE}$

UE applies timing advance of $TA=2 \cdot PD_{eNB-UE}$ relative to the DL reception timing (TA is informed by eNB)

Time Aligned UL transmission by UE to eNodeB

| 1 | 2 | 3 |

Time Aligned UL reception by eNodeB from UE

$PD_{eNB-UE}$

| 1 | 2 | 3 |

UE

Fig. 9

**Fig. 10**

**Fig. 11**

| $C_7$ | $C_6$ | $C_5$ | $C_4$ | $C_3$ | $C_2$ | $C_1$ | R | Oct1 |

**Fig. 12**

| E | T | RAPID | Oct1 |

**Fig. 13**

| E | T | R | R | BI | Oct1 |

**Fig. 14**

| R | TA Cmd | | Oct1 |
|---|---|---|---|
| TA Cmd | | UL Grant | Oct2 |
| UL Grant | | | Oct3 |
| UL Grant | | | Oct4 |
| Temporary C-RNTI | | | Oct5 |
| Temporary C-RNTI | | | Oct6 |

**Fig. 15**

| E/T/R/R/BI subheader | E/T/RAPID subheader 1 | E/T/RAPID subheader 2 | ... | E/T/RAPID subheader n |
|---|---|---|---|---|

| MAC header | MAC RAR 1 | MAC RAR 2 | ... | MAC RAR n | Padding (opt) |
|---|---|---|---|---|---|

←————————MAC payload————————→

## Fig. 16

| Cell A, B, C in a TAG; A is the timing ref. cell |

UE             Network

I need to take cell A out of the TAG; so, DL TRC must be changed.

Measurement Report (cell A is bad) →

← PDCCH Order (Cell B)

| Cell B is the DL Timing Reference Cell |

RANDOM Access Preamble →

← RANDOM Access Response

← RRC Connection Reconfiguration (Remove Cell A)

RRC Connection Reconfiguration Complete (Ok) →

**Fig. 17**

Cell A, B, C in a TAG; A is the timing ref. cell

UE                                                    Network

I need to change the DL
TRC to Cell B.

PDCCH Order (Cell B)

Cell B is the DL Timing Reference Cell

RANDOM Access Preamble

WRONG Decision!!!
TA_CellB >>> TA_TAG

RANDOM Access Response

PDCCH Order (Cell C)

Cell C is the DL Timing Reference Cell

RANDOM Access Preamble

Lucky! TA of Cell C is fine.

RANDOM Access Response

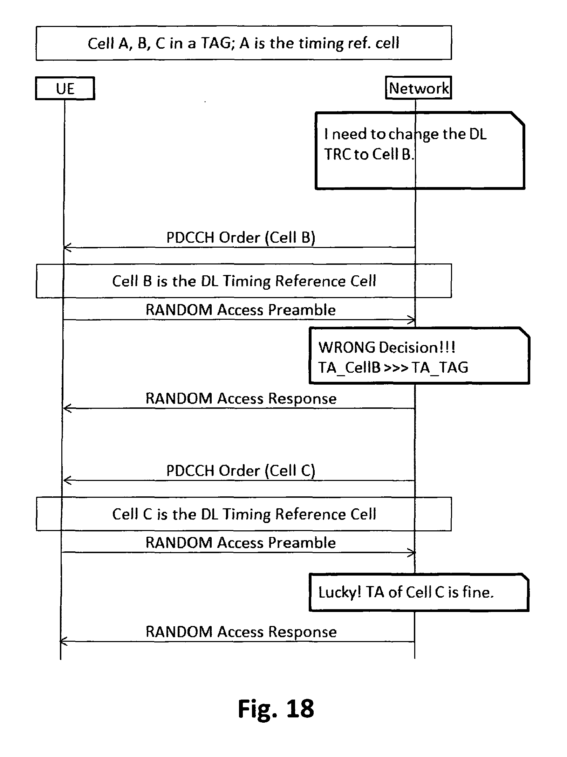

# Fig. 18

Cell A, B, C in a TAG; A is the timing ref. cell

UE

Network

Need to change
the DL TRC to

PDCCH Order (Cell B; PreambleIndex = '00000')

Cell B is the DL Timing Reference Cell

## Fig. 19

Cell A, B, C in a TAG; A is the timing ref. cell

UE

Network

I need to change the DL TRC but not sure if Cell B should be the DL TRC.

PDCCH Order (Cell B; PreambleIndex != '00000')

RANDOM Access Preamble

TA for Cell B is NOT OK

RANDOM Access Response (Change DL TRC = FALSE)

No Change; Cell A is the DL Timing Reference Cell

**Fig. 20**

Cell A, B, C in a TAG; A is the timing ref. cell

UE

Network

Need to change the DL TRC but not sure if Cell B should be the DL TRC.

PDCCH Order (Cell B; PreambleIndex != '00000')

RANDOM Access Preamble

TA for Cell B is OK

RANDOM Access Response (Change DL TRC = TRUE)

Cell B is the DL Timing Reference Cell

# Fig. 21

Cell A, B, C in a TAG; A is the timing ref. cell

UE | Network

Need to change the DL TRC but not sure if Cell B should be the DL TRC.

PDCCH Order (Cell B; PreambleIndex != '00000')

RANDOM Access Preamble

TA for Cell B is OK

RANDOM Access Response

No Change; Cell A is the DL Timing Reference Cell

PDCCH Order (Cell B; PreambleIndex = '00000')

Cell B is the DL Timing Reference Cell

## Fig. 22

Cell A, B, C in a TAG; A is the timing ref. cell

UE

Network

Need to take cell A out of the TAG;
so, DL TRC must be changed.

Measurement Report (cell A is bad)

RRC Connection Reconfiguration (Remove Cell A)

1) New DL TRC = Cell B
2) No need to perform RACH;
preambleIndex = 00000

Cell B is the DL Timing Reference Cell

RRC Connection Reconfiguration Complete (Ok)

# Fig. 23

Europäisches Patentamt
European Patent Office
Office européen des brevets

**EUROPEAN SEARCH REPORT**

Application Number

EP 12 00 1807

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2011/100596 A2 (INTERDIGITAL PATENT HOLDINGS [US]; PANI DIANA [CA]; GOMES SYLVIE [US];) 18 August 2011 (2011-08-18) * paragraph [0061] * ----- | 1-15 | INV. H04W56/00 |
| A | US 2011/103331 A1 (KUO RICHARD LEE-CHEE [TW]) 5 May 2011 (2011-05-05) * paragraphs [0033] - [0035] * * figures 5,6 * ----- | 1-15 | |

TECHNICAL FIELDS SEARCHED (IPC)

H04W

The present search report has been drawn up for all claims

| Place of search | Date of completion of the search | Examiner |
|---|---|---|
| Munich | 23 October 2012 | Bodin, Carl-Magnus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 00 1807

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2012

| Patent document cited in search report | | Publication date | Patent family member(s) | | Publication date |
|---|---|---|---|---|---|
| WO 2011100596 | A2 | 18-08-2011 | TW<br>US<br>WO | 201204148 A<br>2011274040 A1<br>2011100596 A2 | 16-01-2012<br>10-11-2011<br>18-08-2011 |
| US 2011103331 | A1 | 05-05-2011 | TW<br>US | 201141284 A<br>2011103331 A1 | 16-11-2011<br>05-05-2011 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **STEFANIA SESIA ; ISSAM TOUFIK ; MATTHEW BAKER.** LTE - The UMTS Long Term Evolution: From Theory to Practice. John Wiley & Sons, Ltd, 2009